(19) Europäisches Patentamt
European Patent Office
Office européen des brevets

(11) **EP 2 960 888 B1**

(12) **FASCICULE DE BREVET EUROPEEN**

(45) Date de publication et mention
de la délivrance du brevet:
**31.10.2018  Bulletin 2018/44**

(51) Int Cl.:
*G08G 5/02* *(2006.01)*     *G05D 1/06* *(2006.01)*
*B64D 45/04* *(2006.01)*

(21) Numéro de dépôt: **15172234.5**

(22) Date de dépôt: **16.06.2015**

(54) **PROCÉDÉ POUR FACILITER L'APPROCHE D'UNE PLATEFORME**

VERFAHREN ZUM ERLEICHTERN DES ANNÄHERNS AN EINE PLATTFORM

A METHOD FOR FACILITATING THE APPROACH TO A PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2014  FR 1401433**

(43) Date de publication de la demande:
**30.12.2015  Bulletin 2015/53**

(73) Titulaire: **Airbus Helicopters**
**13725 Marignane Cedex (FR)**

(72) Inventeurs:
• **CANALE, Nicolas**
**13006 MARSEILLE (FR)**
• **IRAUDO, Lionel**
**13760 SAINT CANNAT (FR)**

(74) Mandataire: **Pouillot, Laurent Pierre Paul**
**GPI & Associés**
**1330, Rue Guillibert de la Lauzière**
**EuroParc de Pichaury, Bât B2**
**13856 Aix-en-Provence Cedex 3 (FR)**

(56) Documents cités:
**EP-A1- 0 682 332        EP-A1- 2 175 338**
**FR-A1- 2 937 010        FR-A1- 2 944 128**
**US-A1- 2010 168 939     US-A1- 2011 307 126**
**US-A1- 2012 130 566**

• **DODSON K M ET AL: "A North SEA TRIAL TO INVESTIGATE THE USE OF DIFFERENTIAL GPS FOR INSTRUMENT APPROACHES TO OFFSHORE PLATFORMS", EUROPEAN ROTORCRAFT FORUM, AMSTERDAM, NL, 1 septembre 1997 (1997-09-01), pages 61.1-61.14, XP003032933,**
• **"Advisory Circular AC No: 90-80B: Approval of Offshore Standard Approach Procedures, Airborne Radar Approaches, and Helicopter En Route Descent Areas", , 12 avril 1999 (1999-04-12), XP055097872, Extrait de l'Internet: URL:http://www.faa.gov/documentLibrary/media/Advisory_Circular/AC90-80B.pdf [extrait le 2014-01-22]**

**Description**

La présente invention concerne un procédé pour faciliter l'approche d'une plateforme à partir d'un aéronef, et notamment d'un aéronef à atterrissage court tel qu'un aéronef muni d'une voilure tournante par exemple.

L'invention se situe donc dans le domaine technique des systèmes d'assistance au pilotage d'un aéronef, et notamment des systèmes automatisés d'aide à l'approche d'installations maritimes pour giravion.

Une telle installation maritime est munie d'un zone d'atterrissage sur laquelle peut atterrir un aéronef. Ainsi, l'installation maritime peut être une plateforme mobile, une plateforme fixe, un bateau voire une barge.

Par commodité, une installation de ce type est dénommé « plateforme » par la suite.

En effet, un aéronef à voilure tournante doit pouvoir repérer et s'approcher en sécurité de plateformes, indépendamment des conditions météorologiques et de visibilité, en évitant les d'obstacles présents dans la zone d'approche.

L'approche est conduite en tenant compte de la direction et de la vitesse du vent dans le secteur, du type de plateforme à approcher (plateformes fixes, mobiles, bateaux ou barges), des obstacles environnants (grues, barges, bateaux servant au positionnement de la plateforme, bateaux type porte containers ou super tanker naviguant autour de la zone d'approche, ou autres plateformes environnantes), du confort des passagers.

Les approches de plateformes sont généralement constituées des segments de vol suivants.

Ainsi, l'approche comporte un segment d'arrivée qui relie le dernier point de vol de la phase de vol en cours et un point initial d'approche connu sous l'acronyme « IAF » soit « Initial Approach Fix » en langue anglaise. Ce segment d'arrivée est parfois positionné à une altitude de 1500 ft. On rappelle que le symbole « ft » fait référence à l'unité de longueur dénommée « feet » en langue anglaise valant 30.48 centimètres.

Un segment d'approche initiale peut relier le point initial d'approche IAF à un point final d'approche connu sous l'acronyme « FAF » soit « Final Approach Fix » en langue anglaise. Ce segment a pour but d'aligner l'appareil, de décélérer et de préparer le segment d'approche finale.

Au moins un segment d'approche finale relie le point final d'approche FAF et un point de décision connu sous l'acronyme « MAP » soit « Missed Approach Point » en langue anglais.

Si un pilote établit un contact visuel avec la plateforme au point de décision, le pilote peut poser l'aéronef sur cette plateforme.

Par contre, un segment dit de remise des gaz doit être suivi si le contact visuel avec la plateforme n'est pas obtenu à ce stade de l'approche. Ce segment de remise des gaz peut par ailleurs être suivi à n'importe quel moment de l'approche si l'équipage le juge utile. L'objet de ce segment de remise des gaz est de rejoindre une altitude de sécurité.

Lorsque les conditions météorologiques sont défavorables, une approche aux instruments est propice au stress de l'équipage qui doit piloter manuellement l'aéronef pour le guider vers une zone où l'acquisition visuelle de la plateforme sera obtenue.

Dans la transition entre la phase de vols aux instruments et la phase de vol visuelle, l'équipage doit basculer en permanence entre ce qui est affiché sur les écrans de pilotage du tableau de bord, et ce qu'il observe à l'extérieur pour détecter un quelconque signe/indice visuel permettant de confirmer la position de la plateforme (lumière, relief). Cette façon d'approcher d'une plateforme n'est donc pas la plus pratique et peut quelquefois créer des erreurs d'interprétation en cas par exemple de brouillard faisant perdre temporairement l'acquisition visuelle de la cible d'atterrissage.

Les approches aux instruments vers une plateforme ou vaisseaux mobiles sont généralement conduites sans l'utilisation d'un calculateur de navigation, connu sous l'acronyme « FMS » soit « Flight Management System » en langue anglaise, et sans couplage au pilote automatique de l'aéronef sur une trajectoire d'approche prédéfinie par le FMS.

Certaines plateformes sont aujourd'hui équipées d'un dispositif, connu sous l'acronyme « NDB » soit « Non Directional Beacon » en langue anglaise, utilisé par l'équipage via le calculateur de navigation comme moyen d'aide à la navigation et de corrélation de la position de l'appareil avec une précision relative mais ce moyen ne permet pas la construction d'un plan de vol d'approche.

On connaît un calculateur de navigation utilisé pour fournir un guidage horizontal lors de la phase de route, la phase de route correspondant à la phase de vol suivie avant la phase de vol d'approche. Pour la phase de vol d'approche, l'équipage détermine un point cible hors route correspondant aux coordonnées de la plateforme à atteindre comme moyen d'aide à la navigation. Cependant, le calculateur de navigation ne segmente pas les différentes phases de l'approche vers la plateforme pour asservir le pilote automatique sur ces données de guidage (déviation horizontale, verticale, consigne de vitesse).

L'approche est alors conduite manuellement ou semi automatiquement via l'assistance de certains modes supérieurs du pilote automatique en utilisant les cartes d'approche publiées par les opérateurs et approuvées par les autorités locales.

Le radar météorologique de l'aéronef peut en outre être utilisé comme moyen d'identification de la plateforme, de détection et d'évitement d'obstacle transitoire ou fixe au cours de l'approche et de la descente finale.

Le document US 2010/0168939 propose un module et un procédé automatisé d'approche d'une plateforme sur une trajectoire d'approche construite à partir de points d'approche.

Selon ce document US 2010/0168939, un pilote saisit dans un module de l'aéronef :

- les coordonnées de la plateforme cible à atteindre,

- une course d'approche finale vers la plateforme,

- une distance de décalage séparant latéralement la trajectoire à suivre d'une trajectoire dirigée vers la plateforme suivant ce cap d'approche,

- une hauteur de descente.

Dès lors, le module de l'aéronef détermine notamment la position du point initial d'approche IAF et du point final d'approche FAF en réponse aux données saisies. L'aéronef est alors dirigé vers le point initial d'approche.

Ainsi, la trajectoire d'approche construite comporte un segment horizontal reliant un point initial d'approche IAF à un point final d'approche FAF.

Ensuite, la trajectoire comprend un segment de descente puis un segment en palier pour relier le point final d'approche FAF» à un point de décision MAP.

Le point initial d'approche IAF, le point final d'approche FAF et le point de décision MAP sont contenus dans un plan vertical parallèle à la course d'approche choisie. On comprend que l'on appelle par « plan vertical » un plan dirigé selon la pesanteur, des points de ce plan vertical pouvant se trouver à des altitudes différentes.

Ce plan vertical est décalé par rapport à la plateforme d'une distance égale à la distance de décalage saisie.

L'arrière plan technologique inclut aussi les documents suivants :

- Esterline CMC electronics, CMA-9000 flight management system operator's manual, operational program S/W 169-614876-022, publication N°9000-GEN-0105, itel N). 930-6000088-00, august 21.2008

- N.McFarlane, A new procédure for North Sea Helicopter Opérations, Second GIANT use forum, Brussels, Belgium, October 9, 2008,

- K.M Dodson and J.R.A. Stevens, A North Sea trial to investigate the use of Differential GPS for instrument Approaches to Offshore Platforms, paper presented at the 23rd European Rotorcraft Forum, Dresden, Germany, September 1997,

- Advisory circular AC 90-80Bn date du 4 Décembre 1999.

On connaît aussi le document FR 2937010, le document EP 2175338, le document EP 0682332, le document US 2012/0130566, le document US 2011/0307126 et le document FR 2944128.

La présente invention a alors pour objet de proposer un procédé d'approche visant à aider un équipage à atterrir sur une plateforme avec un aéronef.

Selon l'invention, un procédé pour faciliter l'approche d'une plateforme avec un aéronef comprend :

- une étape préparatoire pour construire une base de données de plateformes incluant pour chaque plateforme au moins un attribut définissant ladite plateforme, tel qu'un attribut nommant la plateforme ou un attribut relatif à la position d'une zone de la plateforme,

- une étape de paramétrage durant laquelle on paramètre une distance dite « distance latérale »,

- une phase de vol d'approche le long d'une trajectoire d'approche comprenant un point d'approche initiale IAF, un point d'approche finale FAF, et un point de décision MAP présents dans un même plan vertical dirigé parallèlement à une course, la plateforme cible à atteindre étant décalée par rapport à ce plan vertical d'une distance orthogonale au moins égale à une distance latérale.

Ce procédé est notamment remarquable en ce que :

- durant l'étape préparatoire, pour chaque plateforme on mémorise un attribut relatif à une erreur de positionnement de la plateforme,

- préalablement à la phase de vol d'approche qui débute au point d'approche initiale IAF, on détermine avec un module de contrôle d'intégrité la valeur d'une performance d'intégrité de position requise pour un système de localisation de l'aéronef, cette performance d'intégrité de position étant, égale à la valeur minimale entre d'une part une performance seuil prédéterminée et, d'autre part, le quotient de la différence de ladite distance latérale moins ladite erreur de positionnement (TPE) de la plateforme cible divisée par deux soit :

$$RNP = \min\big[(LOV - TPE)/2 ; k3\big]$$

où « RNP » représente la performance d'intégrité de position requise, « LOV » représente ladite distance latérale, « TPE » représente ladite erreur de positionnement, « k3 » représente ladite performance seuil prédéterminée, « / » représente le signe de la division,

- durant une étape de surveillance mise en oeuvre lors de ladite phase de vol d'approche, ledit aéronef étant muni d'un système de localisation GNSS déterminant le rayon d'un cercle dans lequel ledit aéronef se situe dit « rayon d'intégrité de position »,

   ◦ on compare avec le module de contrôle d'intégrité la performance d'intégrité de position RNP et le rayon d'intégrité de position,

   ◦ on génère une alerte si le rayon d'intégrité de position est supérieur à la performance d'intégrité de position.

La course de l'aéronef à suivre correspond à la direction à suivre lors de la phase de vol d'approche

La distance latérale représente une distance de décalage séparant au moins partiellement latéralement la trajectoire à suivre d'une trajectoire dirigée vers la plateforme suivant la course d'approche.

Lors de la phase de vol d'approche, l'aéronef peut être guidé par un système de localisation GNSS usuel pouvant utiliser différentes constellations telles que GPS, GALILEO, WAAS, EGNOS... ou bien par un système de localisation GNSS hybridé avec une centrale inertielle pour renforcer l'intégrité de la position calculée.

Néanmoins, un tel système de localisation GNSS comporte une incertitude de positionnement plus ou moins importante compte tenu notamment de la géométrie de la constellation du système de localisation GNSS utilisé et des erreurs de mesure de chaque satellite de la constellation dudit système GNSS de localisation utilisé.

Dès lors, un pilote peut penser que l'aéronef suit la trajectoire élaborée, alors que cet aéronef suit une trajectoire réelle parallèle à la trajectoire élaborée. Si la l'intégrité de position fournie par le système de localisation GNSS est insuffisante, cette trajectoire réelle peut conduire l'aéronef vers une position trop proche de la plateforme cible ce qui peut engendrer des risques de conflits contraires au but recherché visant à maîtriser la trajectoire d'approche.

Cette problématique est en outre associée au fait qu'une plateforme n'est pas totalement immobile sur l'eau. Les moyens d'immobilisation d'une plateforme laissent en effet une liberté de mouvement à la plateforme. Ainsi, une plateforme peut évoluer dans un cercle ayant pour rayon l'erreur de positionnement TPE.

Une plateforme fixe a alors classiquement une erreur de positionnement TPE réduite, alors qu'une plateforme mobile peut avoir une erreur de positionnement TPE plus élevée.

Chaque plateforme mémorisée est alors associée à un attribut de type erreur de positionnement TPE.

Ce procédé vise par conséquent à éviter que l'aéronef se dirige droit vers une plateforme cible.

Par suite, un module de contrôle détermine la valeur de la performance d'intégrité de position RNP en fonction de la valeur de la distance latérale et de l'erreur de positionnement. La valeur de la performance d'intégrité de position est dite plus simplement « performance d'intégrité de position ».

Lors de la phase de vol d'approche, le module de contrôle compare la performance d'intégrité de position RNP au rayon d'intégrité de position.

Classiquement, un système de localisation usuel détermine non pas une position de l'aéronef, mais un cercle dans lequel se trouve l'aéronef, ce cercle étant centré sur une position géographique et présentant le rayon d'intégrité de position. Le système de localisation peut aussi évaluer un cercle dans lequel se trouvera l'aéronef à court terme, ce cercle étant centré sur une position géographique prédictive et présentant un rayon dit rayon prédit.

Dès lors, le système de localisation peut transmettre le rayon d'intégrité de position au module de contrôle.

Si le rayon d'intégrité de position est supérieur à la performance d'intégrité de position RNP, une alerte est générée pour interrompre l'approche.

Dès lors le procédé permet de vérifier que la précision d'un système de localisation ne risque pas de conduire l'aéronef sur une plateforme, au lieu de lui faire suivre une trajectoire décalée par rapport à cette plateforme.

Ce procédé peut de plus comporter une ou plusieurs des caractéristiques qui suivent.

Ainsi, l'aéronef peut comporter un indicateur de situation horizontale (communément appelé CDI pour « Course Deviation Indicator » en anglais) muni d'une échelle comprenant une pluralité de plots, ledit indicateur de situation horizontale positionnant sur ladite échelle un premier symbole centré au milieu de l'échelle matérialisant la trajectoire d'approche et un deuxième symbole matérialisant l'écart de position latéral de l'aéronef par rapport à la trajectoire d'approche à suivre (dite « cross track » en langue anglaise), l'écartement entre ledit premier symbole et le deuxième plot adjacent représentant la valeur de la performance d'intégrité de position requise.

Ainsi, l'échelle comporte un premier plot adjacent au premier symbole, et un deuxième plot adjacent au premier plot. Par suite, le premier plot est situé à mi-distance entre le premier symbole et le deuxième plot dit « deuxième plot adjacent ».

Un tel indicateur permet à un pilote de suivre une trajectoire. Dès lors, on asservit la taille de l'échelle de l'indicateur à la valeur de la performance d'intégrité de position RNP.

Cette caractéristique vise aussi à éviter de diriger de manière involontaire l'aéronef vers la plateforme.

Si le deuxième symbole représentant l'écart de position latéral de l'aéronef par rapport à la trajectoire à suivre s'écarte au-delà du premier plot le plus proche du milieu de l'échelle, alors l'approche doit être interrompue par l'équipage. Dès lors, si le deuxième symbole est affiché entre le premier plot et le deuxième plot par exemple, l'approche doit être interrompue.

En outre, la performance seuil prédéterminée peut avoir une valeur de 0.3 Nm (Nautique mile).

Par ailleurs et selon une première variante, durant l'étape de paramétrage, on détermine ladite distance latérale à utiliser en :

- calculant automatiquement la valeur d'une distance théorique minimale égale à la somme de ladite erreur de positionnement de la plateforme cible, d'une marge prédéterminée et du double d'une valeur maximale entre d'une part ledit rayon d'intégrité de position courant et, d'autre part, un rayon prédit fourni par le système de localisation GNSS indiquant le rayon d'intégrité de position qui sera atteint à l'issue d'un temps prédéterminé soit :

$$\text{COMPUTED LOV} = 2 * \max[HPL; HPL5'] + HPLBUFFER + TPE$$

où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,

- en comparant ladite distance théorique minimale à des distances mémorisées dans une liste, ladite distance latérale à utiliser étant égale à la plus petite distance mémorisée supérieure à ladite distance théorique minimale.

Selon cette première variante, la distance latérale à utiliser est déterminée automatiquement en fonction d'une part d'une constante relative à une erreur de positionnement de la plateforme cible et, d'autre part, de l'intégrité de position fournie par le système de localisation GNSS.

Par suite, cette variante tend à au moins limiter les risques de générer une trajectoire qui pourrait conduire l'aéronef directement vers la plateforme cible ou vers une position trop proche de la plateforme compte tenu de l'imprécision de mesure des données utilisées.

Selon une deuxième variante, durant l'étape de paramétrage, ladite distance latérale est fixée à une valeur prédéterminée mémorisée.

Selon cette variante, le système utilise dans un premier temps une distance latérale fixée par le constructeur.

Selon une troisième variante, durant l'étape de paramétrage, la distance latérale est choisie par un pilote à partir d'une liste comprenant une pluralité de distances latérales mémorisées.

Ces trois variantes peuvent être implémentées sur un même système. Dès lors, le pilote peut choisir la variante à mettre en oeuvre, en fonction des conditions de vol par exemple.

Par ailleurs, la trajectoire étant élaborée durant une étape de construction, on autorise la modification de ladite trajectoire jusqu'à un point de fixation prédéterminé situé en amont dudit point d'approche initiale.

Par exemple, un pilote peut modifier la trajectoire en modifiant les données ayant conduits à sa construction.

Le point de fixation peut être calculé en fonction de la position d'un point dénommé « point de virage TP » ou « turning point » en langue anglaise. Ce point de virage correspond au point à partir duquel l'aéronef doit effectuer un virage pour rallier le point d'approche initiale IAF.

Ainsi, le point de fixation peut correspondre aux coordonnées géographiques qui seront atteintes une minute avant le point de virage TP, par exemple.

Par ailleurs, durant une étape de vérification réalisée préalablement à ladite phase de vol d'approche et suite à une étape de construction de la trajectoire:

- on détermine si une distance latérale dite « distance latérale courante » ayant servie à l'élaboration de la trajectoire est compatible avec le rayon d'intégrité de position calculée par le système de localisation GNSS de l'aéronef en :

  ◦ calculant automatiquement la valeur d'une distance théorique minimale égale à la somme de ladite erreur de positionnement de la plateforme cible, d'une marge prédéterminée et du double d'une valeur maximale entre d'une part ledit rayon d'intégrité de position et, d'autre part, un rayon prédit fourni par le système de localisation GNSS indiquant le rayon d'intégrité de position qui sera atteint à l'issue d'un temps prédéterminé soit :

$$COMPUTED\,LOV = 2 * \max\left[(HPL; HPL5') + HPLBUFFER + TPE\right.$$

  où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,
  ◦ en comparant ladite distance latérale courante à ladite distance théorique minimale

- lorsque ladite distance latérale courante est inférieure à ladite distance théorique minimale, une liste comprenant une pluralité de distances mémorisées :

  ◦ on abandonne ladite approche si ladite plus grande distance mémorisée est inférieure à ladite distance théorique minimale, ou

  ◦ on augmente ladite distance latérale courante pour obtenir une distance latérale amendée, cette distance latérale amendée étant égale à la plus petite distance mémorisée dans ladite liste qui est supérieure à ladite distance théorique minimale, puis on remet en oeuvre ladite étape de construction en remplaçant ladite distance latérale courante par ladite distance latérale amendée.

Ainsi, le procédé comprend une étape de vérification interposée entre l'étape de construction et la phase de vol d'approche.

Cette étape de vérification vise à vérifier avant la phase de vol d'approche que la distance latérale courante ayant donné naissance à la trajectoire de la phase de vol d'approche et la performance seuil prédéterminée associée sont compatibles avec l'intégrité de position fournie par le système de localisation GNSS guidant l'aéronef.

Dans la négative, deux alternatives sont alors envisagées.

Si la liste mémorisée comprend une distance latérale compatible avec l'intégrité de position fournie par ce système de localisation GNSS, une nouvelle trajectoire d'approche est élaborée en prenant en considération cette distance latérale dite « distance latérale amendée ».

Une alerte peut être générée pour alerter l'équipage.

Par contre, si la liste mémorisée ne comprend pas une distance latérale compatible avec l'intégrité de position fournie par ce système de localisation GNSS, l'approche doit être abandonnée. Une alerte est donc générée à cet effet.

Cette étape de vérification peut par ailleurs être mise en oeuvre automatiquement ou sur requête tant qu'un point de passage prédéterminé n'est pas atteint.

Selon une première alternative, on autorise la mise en oeuvre de ladite étape de vérification tant que l'aéronef est situé par exemple à plus de trois minutes du point d'approche initiale IAF.

Selon une deuxième alternative, on autorise la mise en oeuvre de ladite étape de vérification tant que l'aéronef est situé à plus de deux minutes d'un point de virage à partir duquel l'aéronef doit effectuer un virage pour rallier ledit point d'approche initiale IAF.

Ces deux alternatives sont compatibles. Par exemple, l'étape de vérification devient impossible à mettre en oeuvre si l'aéronef se situe à moins de trois minutes du point d'approche initiale IAF ou à moins de deux minutes d'un point de virage.

Par ailleurs, pour élaborer la trajectoire d'approche,

- durant l'étape préparatoire, pour au moins une plateforme, on mémorise des attributs définissant au moins une zone cible matérialisant une destination, ladite au moins une zone cible incluant un centre géométrique de la plateforme, lesdits attributs comprenant pour ce centre géométrique des coordonnées géographiques de ce centre géométrique, au moins une hauteur de ce centre géométrique et le rayon dit « rayon d'obstacle » d'un cercle centrée sur le centre géométrique dans lequel est inscrite la plateforme,

- durant l'étape de paramétrage, les informations suivantes sont paramétrées avec un module de paramétrage :

  ◦ une zone cible dite « zone cible choisie » sélectionnée parmi les zones cibles mémorisées,

  ◦ une course à suivre pour rejoindre ladite plateforme cible munie de la zone cible choisie,

  ◦ un paramètre de hauteur relatif à une altitude minimale de décision d'un point de décision pour une descente en approche finale vers ladite plateforme cible,

- durant une étape de construction mise en oeuvre par un module de navigation, si ladite zone cible choisie est un centre géométrique, on construit ladite trajectoire d'approche en déterminant la position du point d'approche initiale IAF, du point d'approche finale FAF, et du point de décision MAP en réponse auxdites informations et auxdits attributs de la zone cible choisie, le point d'approche initiale IAF ainsi que le point d'approche finale FAF et le point de décision MAP étant présents dans ledit plan vertical dirigé parallèlement à ladite course, ledit centre géométrique étant décalé par rapport à ce plan vertical d'une distance orthogonale égale à la somme de ladite distance latérale et dudit rayon d'obstacle.

On rappelle qu'une « hauteur » représente la distance verticale entre un corps et un sol, une « altitude » représentant la distance verticale entre un corps et le niveau de la mer. La hauteur d'un aéronef est usuellement mesurée par une radiosonde par le biais d'ondes électromagnétiques, l'altitude étant mesurée par un altimètre via une mesure de pression.

Par conséquent, la hauteur et l'altitude d'un aéronef ou d'une zone d'atterrissage d'une plateforme au-dessus de la mer font référence à des distances équivalentes si l'on calibre l'altimètre avec la pression ramenée au niveau de la mer, ce qui correspond au QNH. Le QNH représente usuellement la pression barométrique corrigée des erreurs instrumentales, de température et de gravité et ramenée au niveau moyen de la mer suivant les caractéristiques de l'atmosphère standard.

Dès lors, ce procédé met en oeuvre une approche selon un plan vertical décalé latéralement par rapport à une plateforme.

De plus, ce procédé introduit un paramètre innovant pour élaborer cette trajectoire d'approche. Ce paramètre innovant est le rayon d'un cercle dans lequel est inscrite la plateforme cible dénommé « obstacle radius » en langue anglaise.

En effet, une plateforme peut comporter une pluralité de zones sur lesquelles un aéronef peut atterrir. De plus, une telle zone peut être relativement éloignée d'une extrémité de la plateforme.

Par suite, une trajectoire fortement décalée latéralement par rapport à une telle zone risque d'être peu décalée par rapport à une extrémité de la plateforme.

Le procédé selon l'invention permet d'y remédier en définissant un centre géométrique et un rayon d'obstacle. Ainsi, la trajectoire d'approche prend en considération les spécificités géométriques de la plateforme cible, contrairement aux trajectoires basées sur des coordonnées d'une plateforme uniquement.

Ainsi, le procédé permet de faciliter le travail d'un équipage en élaborant la trajectoire à suivre facilement. L'étape de paramétrage peut d'ailleurs être semi-automatique en proposant des choix par défaut à cet équipage, l'équipage pouvant simplement valider les choix proposés, ou les modifier.

Par ailleurs, ce procédé peut inclure une étape de guidage sur le point d'approche initiale IAF calculé. Un organe de guidage guide alors l'aéronef vers ce point d'approche initiale.

L'organe de guidage peut comprendre un module de guidage horizontal et/ou vertical communiquant avec un système de pilotage automatique pour guider l'aéronef le long de la trajectoire d'approche élaborée par le module de navigation.

Par exemple, le module de paramétrage, le module de navigation, un module de guidage horizontal et un module de guidage vertical sont implémentés dans un calculateur de navigation connu sous l'acronyme FMS. Ce calculateur de navigation peut alors fournir des données de guidage à un système de pilotage automatique pour guider l'aéronef sur la trajectoire élaborée.

Eventuellement, il est aussi possible d'afficher des informations sur des instruments de pilotage pour que le pilote dirige manuellement l'aéronef le long de la trajectoire élaborée. Par exemple, un cap optimal à suivre ou une vitesse de descente sont affichés pour aider le pilote à suivre cette trajectoire. Ce cap est par exemple choisi pour placer l'aéronef face au vent.

Par ailleurs, durant l'étape préparatoire, pour au moins une plateforme, on peut mémoriser des attributs définissant au moins une zone cible de type zone d'atterrissage distincte dudit centre géométrique, lesdits attributs mémorisés incluant des coordonnées géographiques de cette zone d'atterrissage, au moins une hauteur de cette zone d'atterrissage.

Par suite, durant l'étape de construction, si ladite zone cible choisie est une zone d'atterrissage, on détermine la position d'un point d'approche initiale IAF, d'un point d'approche finale FAF, d'un point de décision MAP en réponse auxdites informations et auxdits attributs de la plateforme cible, le point d'approche initiale IAF ainsi que le point d'approche finale FAF ainsi que point de décision MAP étant présents dans un même plan vertical dirigé parallèlement à ladite course et, ladite zone d'atterrissage étant décalée par rapport à ce plan vertical d'une distance orthogonale égale à ladite distance latérale.

Par suite, la base de données peut comprendre pour au moins une plateforme des attributs incluant :

- le nom de la plateforme,

- des données relatives au centre géométrique de la plateforme et notamment à sa position, à savoir les coordonnées géographiques de ce centre géométrique, une hauteur de ce centre géométrique et le rayon d'obstacle de la plateforme,

- des données relatives à au moins une zone d'atterrissage et notamment à sa position, à savoir les coordonnées géographiques de cette zone d'atterrissage, au moins une hauteur de cette zone d'atterrissage,

Selon cette variante, un opérateur choisit une plateforme cible puis une zone cible.

Toutefois, le nom de la plateforme n'est pas obligatoire. Chaque zone d'atterrissage et chaque centre géométrique peut par exemple inclure un attribut comprenant à la fois un identifiant et le nom de la plateforme.

Dès lors, il n'est pas nécessaire de choisir une plateforme puis une zone de cette plateforme.

Par ailleurs, la hauteur du centre géométrique peut être rendue égale à la hauteur de la zone d'atterrissage la plus élevée.

Dès lors, un opérateur peut choisir de diriger l'aéronef vers la plateforme en sélectionnant directement ou indirectement une zone cible pouvant être soit le centre géométrique soit une zone d'atterrissage d'une plateforme.

Par exemple, un calculateur de navigation affiche sur un écran ce centre géométrique, les zones d'atterrissage et la course à suivre. Dès lors, l'opérateur peut considérer qu'une trajectoire basée sur le centre géométrique risque de positionner le point de décision MAP à une distance importante d'une zone d'atterrissage.

Si la géométrie de la plateforme le permet, l'opérateur peut alors préférer choisir une zone cible de type zone d'atterrissage.

Par ailleurs, durant l'étape de paramétrage :

- soit un pilote paramètre manuellement ladite altitude minimale de décision MDA,

- soit on détermine automatiquement avec le module de navigation ladite altitude minimale de décision MDA, cette altitude minimale de décision MDA étant la valeur maximale entre d'une part une altitude seuil et, d'autre part la somme de ladite hauteur de la zone cible choisie et d'une constante minimale de décision prédéterminée par le constructeur.

Ainsi, l'équipage peut choisir un paramétrage manuel pour déterminer l'altitude minimale de décision MDA. A cet effet, l'équipage peut saisir cette altitude minimale de décision MDA, ou valider une altitude par défaut par exemple.

Toutefois, l'unité de navigation peut aussi déterminer automatiquement l'altitude minimale de décision MDA adéquate selon des relations mémorisées et établies par le constructeur.

Par exemple, l'altitude minimale de décision MDA est la valeur maximale entre d'une part une altitude seuil et, d'autre part la somme de ladite hauteur d'atterrissage et d'une constante.

Notamment, le module de navigation peut déterminer l'heure d'arrivée sur la plateforme, l'altitude seuil variant selon cette heure d'arrivée.

Par exemple, l'altitude seuil peut s'élever durant un vol de jour à 200 ft par exemple, et durant un vol de nuit à 300 ft.

A cet effet, le module de navigation fait appel à des vitesses d'avancement prédéterminées et mémorisées entre les divers points de passage calculés pour estimer l'heure d'arrivée.

La première variante et la deuxième variante sont compatibles entre elles. Ainsi, un équipage peut choisir durant l'étape de paramétrage l'une ou l'autre de ces variantes.

Par ailleurs, durant l'étape de paramétrage, on peut choisir un côté de décalage du plan vertical par rapport à la plateforme cible.

L'équipage peut choisir de positionner le point de décision à gauche ou à droite de la plateforme cible, la gauche et la droite s'entendant selon le sens de déplacement de l'aéronef vers la plateforme.

A titre de variante ou de complément, le procédé peut imposer un côté de décalage. Par exemple, la base de données peut spécifier un côté de décalage, pour éviter un obstacle identifié par exemple.

En outre, le point de décision MAP peut être positionné en déterminant une distance longitudinale D1 le séparant d'un plan tangent passant par les coordonnées géographiques de la zone cible choisie et orthogonal au plan vertical selon la relation suivante :

$$D1 = D0 / \tan(\alpha)$$

où « / » représente le signe de la division, « D0 » représente ladite distance orthogonale, «a » représente un angle de décalage fixé par le constructeur. Cet angle de décalage peut être de l'ordre de 30 degrés par exemple. En outre, le point d'approche finale FAF peut être positionné à une altitude minimale de sécurité MSA, ladite altitude minimale de sécurité MSA étant égale à la valeur maximale entre d'une part une altitude minimale de sécurité seuil et, d'autre part, la somme d'une hauteur d'un sommet de la plateforme cible et d'une constante minimale de sécurité prédéterminée par le constructeur.

Par ailleurs, le point d'approche finale FAF est éventuellement positionné à une distance d'approche finale du point de décision MAP égale à

$$DFAF = K1 + \frac{MSA - MINI}{\tan \beta}$$

où « DFAF » représente la distance d'approche finale, « k1 » représente une constante d'approche fixée par le constructeur par exemple de l'ordre de un mile nautique, « MSA » représente une altitude minimale de sécurité à laquelle est positionné le point d'approche finale par exemple de l'ordre de 1500 ft, « MINI » représente ladite altitude minimale de décision MDA par exemple de l'ordre de 200 ft, « $\beta$ » représente l'angle d'un segment de vol en descente reliant le point d'approche finale à un plan horizontal contenant ledit point de décision (MAP) par exemple de l'ordre de 3.75 degrés.

En outre, le point d'approche initiale IAF peut être positionné à l'altitude minimale de sécurité MSA du point d'approche finale FAF.

Ce point d'approche initiale IAF est en outre éventuellement positionné à une distance d'approche initiale du point de décision MAP égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur par exemple de l'ordre de deux miles nautiques, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP.

Selon une variante, la trajectoire d'approche comprend un point de palier LPO interposé entre le point d'approche finale FAF et le point de décision MAP, le point de palier étant placé à la même altitude minimale de décision MDA que le point de décision MAP et à une distance de palier du point de décision MAP égale à

$$DLPO = k1$$

où « DLPO » représente la distance de palier, « k1 » représente une constante d'approche fixée par le constructeur.

On rappelle que l'unité « Nm » fait référence à un mile nautique équivalent à 1852 mètres.

L'invention et ses avantages apparaîtront avec plus de détails dans le cadre de la description qui suit avec des exemples donnés à titre illustratif en référence aux figures annexées qui représentent :

- la figure 1, un schéma présentant un aéronef mettant en oeuvre le procédé selon l'invention,

- la figure 2, un schéma présentant un calculateur de navigation de cet aéronef,

- la figure 3, un schéma présentant le procédé selon l'invention,

- les figures 4 à 9, des schémas explicitant une étape de paramétrage, et

- la figure 10, un schéma présentant la trajectoire d'approche construite,

- les figures 11 et 12, des schémas explicitant l'étape de vérification et l'étape de contrôle.

Les éléments présents dans plusieurs figures distinctes sont affectés d'une seule et même référence.

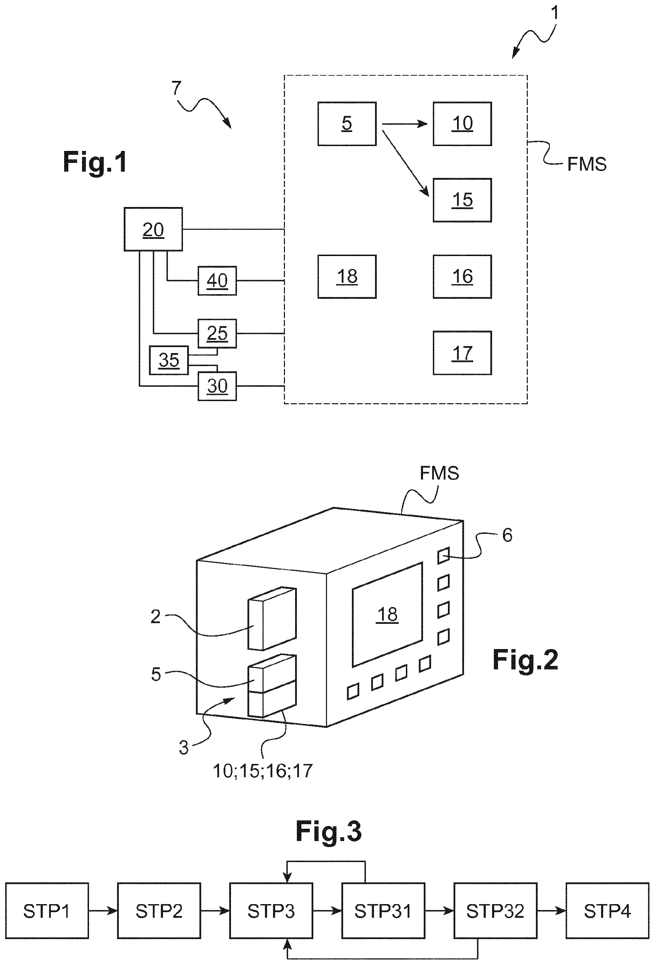

La figure 1 présente un aéronef 1, et notamment un aéronef à voilure tournante pouvant se poser sur une plateforme en mer.

Cet aéronef 1 est muni d'un système 7 d'aide à la navigation incluant une base de données 5 embarquée communiquant avec un module de paramétrage 10.

Le module de paramétrage 10 inclut par exemple un écran de visualisation, des moyens de saisie manoeuvrables par un équipage, une mémoire et un organe de calcul de type processeur par exemple exécutant des instructions mémorisées.

De plus, le système d'aide à la navigation inclut un module de navigation 15 pouvant être relié à la fois à la base de données 5 et au module de paramétrage 10. En fonction d'éléments transmis par la base de données 5 ainsi que par le module de paramétrage 10 et le cas échéant d'éléments mémorisés, le module de navigation 15 élabore automatiquement une trajectoire d'approche.

Le module de navigation 15 inclut par exemple un écran de visualisation, des moyens de saisie manoeuvrables par un équipage, une mémoire et un organe de calcul de type processeur par exemple exécutant des instructions mémorisées.

Le module de navigation 15 peut alors communiquer avec un module de guidage vertical 25 et / ou avec un module de guidage horizontal 30 qui génèrent des consignes transmises à un système de pilotage automatique 35. Le système de pilotage automatique agit alors sur des moyens de commande pour diriger l'aéronef. On se référera à la littérature pour obtenir des informations relatives à un tel système de pilotage automatique ou à des modules de guidage.

Chaque module de guidage peut en outre communiquer avec un système de localisation GNSS 20. Ce système de localisation GNSS 20 peut être un système usuel ou hybridé avec une centrale inertielle.

Le module de navigation peut aussi communiquer avec des instruments de bord, via éventuellement les modules de guidage. Ainsi, des données relatives aux actes à réaliser pour suivre la trajectoire élaborée peuvent être affichées sur des instruments de bord de l'aéronef.

Notamment, le système 7 peut comprendre un indicateur de situation horizontale 40 relié au système de localisation GNSS 20 pour afficher la trajectoire à suivre et une représentation de l'aéronef par rapport à cette trajectoire.

Par ailleurs, le système peut comprendre un module de vérification 17 pour vérifier que la trajectoire élaborée est compatible avec l'intégrité de position calculée par le système de localisation GNSS 20. Le module de vérification 17 inclut par exemple un écran de visualisation, des moyens de saisie manoeuvrables par un équipage, une mémoire et un organe de calcul de type processeur par exemple exécutant des instructions mémorisées.

En outre, le système peut comprendre un module de contrôle d'intégrité 16 pour vérifier lors d'une phase de vol d'approche que la trajectoire suivie est compatible avec l'intégrité de position courante calculée par le système de localisation GNSS 20. Le module de contrôle d'intégrité 16 inclut par exemple un écran de visualisation, des moyens de saisie manoeuvrables par un équipage, une mémoire et un organe de calcul de type processeur par exemple exécutant des instructions mémorisées.

Par exemple, au moins un des modules de paramétrage 10, de navigation 15, de contrôle d'intégrité 16 et de vérification 17 est une partie constitutive d'un calculateur de navigation FMS (« Flight Management System » en langue anglaise).

En référence à la figure 2, ce calculateur de navigation FMS comprend un boîtier portant un écran 18 et de multiples boutons 6. Ce boîtier accueille une unité de calcul 2 exécutant des instructions mémorisées dans une unité de stockage 3.

Dès lors, cette unité de stockage 3 peut comprendre au moins une mémoire stockant des instructions sous forme de segments de code par exemple.

Des segments de code associés à l'unité de calcul peuvent alors représenter respectivement les modules de paramétrage 10, de navigation 15, de contrôle d'intégrité 16 et de surveillance d'approche 17.

De même, la base de données 5 peut être mémorisée dans une mémoire de l'unité de stockage 3.

Un tel calculateur de navigation FMS est alors en communication par de multiples interfaces avec le système de localisation GNSS 20, l'indicateur de situation horizontale 40, le module de guidage vertical 25 et/ ou le module de guidage horizontal 30.

La figure 3 présente diverses étapes d'un procédé selon l'invention mis en oeuvre par un système 7 d'aide à la navigation.

Durant une étape préparatoire STP1, un utilisateur élabore la base de données 5. Cet utilisateur établit une liste de plateformes susceptibles de constituer une destination pour ses aéronefs.

Dès lors, l'utilisateur mémorise dans la base de données 5 une pluralité d'attributs pour chaque plateforme sélectionnée. Ces attributs peuvent inclure un identifiant ID de la plateforme.

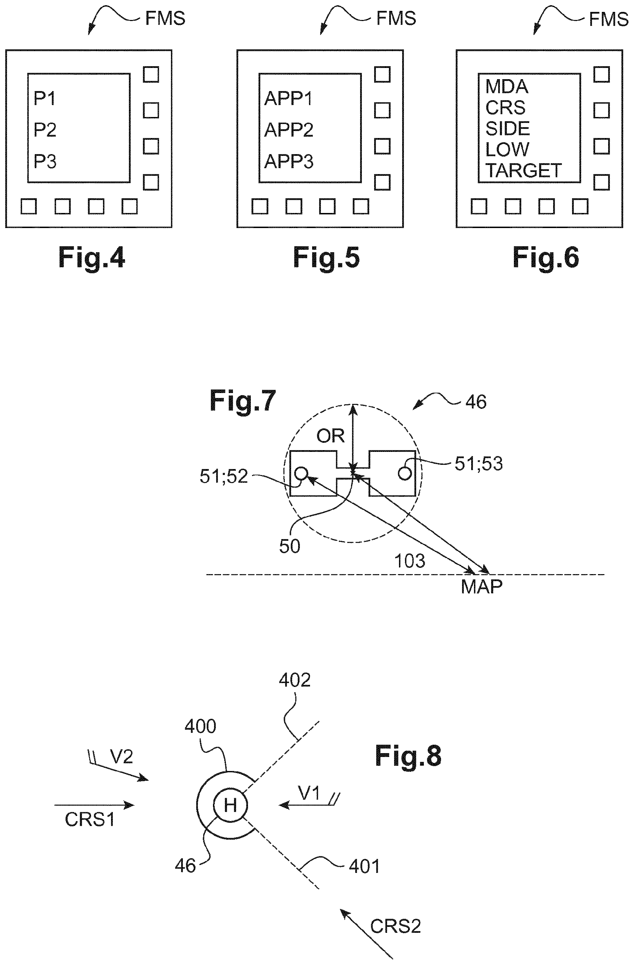

De plus et en référence à la figure 7, ces attributs définissent au moins une zone cible par plateforme.

La base de données 5 peut être dépourvue d'un identifiant des plateformes. Dès lors, l'identifiant des zones cibles peut par exemple comprendre une référence au nom de la plateforme correspondant.

Notamment, ces attributs définissent une zone cible matérialisée par un centre géométrique 50 de la plateforme 46. Ainsi, les attributs incluent les coordonnées géographiques de ce centre géométrique 50, une hauteur de ce centre géométrique et le rayon dit « rayon d'obstacle » OR d'un cercle centré sur le centre géométrique 50 dans lequel est inscrite la plateforme.

De plus, ces attributs peuvent définir au moins une zone cible matérialisant une zone d'atterrissage 51. Ainsi, les attributs incluent les coordonnées géographiques de cette zone d'atterrissage et une hauteur de cette zone d'atterrissage.

En outre, ces attributs peuvent comprendre une hauteur maximale de la plateforme, à savoir la hauteur du sommet de la plateforme.

De plus, chaque zone cible d'une plateforme peut être associée à un attribut qualifiant une erreur de positionnement de la plateforme.

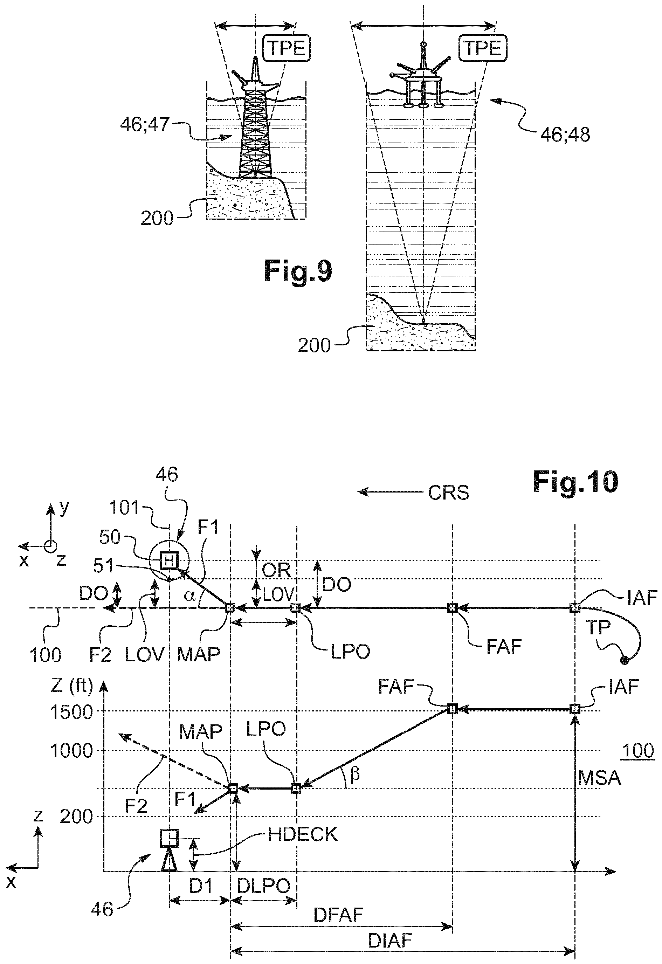

En référence à la figure 9, une plateforme 46 peut être une plateforme dite « fixe » 47 reposant sur le fond 200 d'une mer.

Dès lors, la liberté de mouvement de la plateforme fixe 47 autour des coordonnées géographiques des zones cibles mémorisés est faible. L'erreur de positionnement TPE d'une telle plateforme fixe est alors relativement faible.

Par contre, une plateforme 46 peut être une plateforme dite « mobile » 48 ancrée sur le fond 200 d'une mer. Dès lors, la liberté de mouvement de la plateforme mobile 48 autour des coordonnées géographiques des zones cibles mémorisées est importante. L'erreur de positionnement TPE d'une telle plateforme mobile est alors relativement importante.

Par conséquent, la base de données associe chaque zone cible à de multiples attributs, ces attributs incluant des informations propres à la plateforme correspondante et / ou propre à la zone cible.

En référence à la figure 3, l'équipage d'un aéronef peut mettre en oeuvre une étape de paramétrage STP2 pour paramétrer l'approche vers une plateforme.

A cet effet, une pluralité d'informations sont paramétrées ou paramétrables durant cette étape de paramétrage STP2.

Ainsi, l'équipage peut choisir la plateforme cible sur laquelle l'aéronef doit atterrir.

En référence à la figure 4, le module de paramétrage 10 peut présenter la liste des plateformes P1, P2, P3 mémorisées dans la base de données 5. L'équipage peut par exemple sélectionner la plateforme P1 sur le calculateur de navigation FMS.

En référence à la figure 5 et de manière optionnelle, le module de paramétrage 10 peut par exemple présenter différents types d'approches disponibles. Il est à noter que la base de données peut éventuellement comporter un attribut pour les plateformes mémorisées faisant référence à ces types d'approches.

Cette liste d'approche peut notamment comprendre une approche de type ARA, ou encore une approche de type DELTA30 OSAP, ou une approche de type OFFSET selon l'invention.

En référence à la figure 6, le module de paramétrage 10 permet à l'équipage de l'aéronef de paramétrer d'autres informations. Le module de paramétrage 10 peut par exemple présenter des valeurs par défaut pour les informations à paramétrer, permettre à un utilisateur de choisir des valeurs parmi une liste, ou peut encore exécuter des instructions pour calculer lesdites informations en fonction de données annexes.

Durant cette étape de paramétrage, le système 7 permet de paramétrer la zone cible de la plateforme à atteindre, représentée par l'expression « TARGET » selon l'exemple de la figure 6. L'équipage sélectionne alors une zone cible parmi la liste de zone cibles associées à la plateforme cible choisie.

Selon une variante, un opérateur peut choisir directement une zone cible, sans déterminer au préalable une plateforme cible à atteindre.

De plus, le système 7 permet de paramétrer une altitude minimale de décision MDA à laquelle se trouve le point de décision MAP.

Selon une première variante, l'équipage spécifie que l'altitude minimale de décision MDA doit être paramétrée manuellement, et effectue un tel paramétrage. Le constructeur peut imposer une altitude minimale de décision à respecter par sécurité. Par exemple, le constructeur peut décider que l'altitude minimale de décision MDA ne doit pas être inférieure à 300 ft, ou encore à la somme de la hauteur de la zone cible choisie et d'une marge de sécurité. Cette marge peut être de l'ordre de 50 ft.

Selon une deuxième variante, l'équipage spécifie que l'altitude minimale de décision MDA doit être paramétrée automatiquement.

Dès lors, l'altitude minimale de décision MDA est soit une altitude seuil, soit la somme de la hauteur HDECK de la zone cible choisie et d'une constante minimale de décision prédéterminée par le constructeur. La valeur la plus haute est utilisée par la suite.

L'altitude seuil peut dépendre des conditions de visibilité, et notamment d'un atterrissage de jour ou de nuit. Ainsi, l'altitude seuil peut être de 200 ft lors d'un atterrissage de jour et de 300 ft lors d'un atterrissage de nuit.

Par conséquent, le module de navigation 15 peut le cas échéant faire un prétraitement pour estimer l'heure d'arrivée sur la plateforme cible munie de la zone cible choisie afin de déterminer si l'atterrissage va se produire de jour ou de nuit.

Selon l'exemple présenté, l'équipage peut le cas échéant choisir un côté de décalage SIDE pour déterminer où doit se trouver la plateforme par rapport au plan vertical contenant le point de décision MAP.

Ce point de décision correspond à un point où l'équipage doit choisir soit de se diriger vers la plateforme pour procéder à l'atterrissage, soit de mettre en oeuvre une procédure alternative si l'atterrissage s'avère impossible.

Le module de paramétrage 10 permet notamment durant l'étape de paramétrage STP2 de paramétrer une course CRS à suivre pour atteindre la zone cible choisie.

La course peut être paramétrée manuellement par l'équipage.

Toutefois et en référence à la figure 8, la course CRS peut être déterminée automatiquement par le système 7.

En effet, le système 7 peut comprendre un dispositif météorologique relié au calculateur de navigation pour lui transmettre le sens du vent V1, V2 au niveau de la plateforme cible.

Ce sens du vent peut aussi être paramétré par l'équipage.

Dès lors, le calculateur de navigation consulte la base de données pour déterminer si la zone cible choisie est associée à un secteur angulaire d'approche 400.

Dans la négative, la course paramétrée est alors choisie pour se produire dans le vent.

A l'inverse, le calculateur de navigation détermine si une course dans le vent serait contenue dans le secteur angulaire d'approche 400. Dans l'affirmative, la course paramétrée est alors choisie pour se produire dans le vent. Dans la négative, la course paramétrée est alors choisie pour être dirigée selon la plus proche limite 401, 402 du secteur angulaire 400.

Selon le premier exemple représenté, la première direction V1 du vent permet de placer la première course CRS1 dans le vent.

Par contre, la deuxième direction V2 du vent induit le placement de la deuxième course CRS2 selon une limite 401 du secteur angulaire 400.

En outre et en référence à la figure 3, durant l'étape de paramétrage, le système 7 paramètre une distance latérale LOV.

Selon une première variante, la distance latérale LOV est paramétrée par un équipage. Ainsi, cet équipage choisit une distance latérale LOV par exemple à partir d'une liste comprenant une pluralité de distances latérales mémorisées.

Selon une deuxième variante, le module de paramétrage 10 fixe la distance latérale à une valeur prédéterminée mémorisée.

Selon une troisième variante, le module de paramétrage 10 calcule la distance latérale.

Par suite, le module de paramétrage 10 calcule une distance théorique minimale COMPUTED LOV en appliquant la première relation suivante :

$$\mathrm{COMPUTED\ LOV} = 2 * \max[HPL; HPL5'] + HPLBUFFER + TPE$$

où « COMPUTED LOV » représente ladite distance théorique minimale, « TPE » représente ladite erreur de positionnement de la plateforme cible choisie, « HPL BUFFER » représente une marge fixe mémorisée, « HPL » représente un rayon d'intégrité de position courant, « HPL5' » représente un rayon prédit, « * » représente le signe de la multiplication.

Le rayon d'intégrité de position qualifié de « courant » représente le rayon d'intégrité de position déterminé à l'instant courant auquel la distance théorique minimale est calculée. A l'inverse, le rayon prédit représente le rayon d'intégrité de position qui sera atteint à l'issue d'une durée prédéterminée.

Le rayon d'intégrité de position HPL (selon l'acronyme anglais HPL signifiant « Horizontal Protection Limit ») et le rayon prédit HPL5' sont des données usuellement déterminées par un système de localisation GNSS. Ces données sont donc transmises au module de paramétrage 10 par ce système de localisation GNSS.

Dès lors, le module de paramétrage 10 compare la distance théorique minimale calculée à des distances mémorisées dans une liste.

Le module de paramétrage 10 considère alors que la valeur de la distance latérale est égale à la valeur de la plus petite distance mémorisée supérieure à ladite distance théorique minimale.

Par exemple, la distance théorique minimale calculée vaut 0.38 Nm. En outre, la liste de distances comporte éventuellement les distances suivantes : 0.25, 0.3, 0.35, 0.4, 0.5, 0.6, 0.75. Dès lors, le module de paramétrage 10 paramètre automatiquement la distance latérale en lui assignant alors la valeur de 0.4 Nm.

A l'issue de l'étape de paramétrage, le système 7 élabore une trajectoire d'approche en utilisant les attributs et les informations paramétrées.

Durant une étape de construction STP3, le module de navigation élabore une trajectoire d'approche à suivre pour rejoindre la zone cible choisie en fonction des attributs présents dans la base de données 5, et des informations paramétrées durant l'étape de paramétrage STP2.

La figure 10 présente la trajectoire élaborée par le module de navigation. Plus précisément, la partie inférieure de la figure 10 présente une vue de côté et donc en élévation de la trajectoire élaborée pour se rendre sur une zone cible choisie d'une plateforme 46. La partie supérieure de la figure 10 présente une vue de dessus de la trajectoire élaborée.

Le module de navigation détermine notamment la position d'un point d'approche initiale IAF, d'un point d'approche finale FAF, et d'un point de décision MAP en fonction desdites informations et desdits attributs.

Eventuellement, un point de palier LPO est aussi déterminé.

Le point d'approche initiale IAF, le point d'approche finale FAF, le point de décision MAP, et le cas échéant le point de palier LPO sont agencés dans un même plan vertical 100. Ce plan vertical 100 est parallèle à la course CRS paramétrée.

Par contre, le plan vertical 100 est décalé latéralement d'une distance orthogonale D0 par rapport à la plateforme, et notamment à la zone cible choisie. Ainsi, ce plan vertical 100 n'est pas dirigé sur la plateforme cible.

Un décalage vers la gauche ou vers la droite du plan vertical par rapport à la plateforme est éventuellement paramétré durant l'étape de paramétrage STP2.

Si la zone cible choisie est le centre géométrique de la plateforme, la distance orthogonale D0 est égale à la somme de la distance latérale LOV paramétrée précédemment et du rayon d'obstacle OR associé à la zone cible choisie.

Si la zone cible choisie est une zone d'atterrissage 51, la distance orthogonale D0 est égale à la distance latérale LOV paramétrée précédemment.

Le point de décision MAP et le cas échéant le point de palier LPO sont disposés à une hauteur égale à l'altitude minimale de décision MDA.

En outre, le module de navigation détermine la position du point de décision MAP en déterminant une distance longitudinale D1 le séparant d'un plan tangent 101 passant par les coordonnées géographiques de la zone cible choisie et orthogonal au plan vertical 100 selon la relation suivante :

$$D1 = D0 / \tan(\alpha)$$

où « / » représente le signe de la division, « D0 » représente ladite distance orthogonale, «a » représente un angle de décalage fixé par le constructeur.

L'angle de décalage $\alpha$ peut valoir 30 degrés.

En référence à la figure 8, le point de décision est plus ou moins éloigné d'une zone d'atterrissage en fonction du choix de la zone cible.

Par exemple, si l'équipage a choisi le centre géométrique en tant que cible, la zone d'atterrissage 52 située à gauche du centre géométrique est relativement éloignée du point de décision MAP. A l'inverse, la zone d'atterrissage 52 située à droite du centre géométrique est relativement proche du point de décision MAP.

Dès lors, durant l'étape de paramétrage, le système peut afficher sur un écran une représentation présentant les informations de la figure 8. Dès lors, un équipage peut choisir la zone cible la plus adaptée à son besoin.

En référence à la figure 10, si la trajectoire d'approche comprend un point de palier LPO, le point de palier est placé à une distance de palier DLPO égale à :

$$DLPO = k1$$

où « DLPO » représente la distance de palier, « k1 » représente une constante d'approche fixée par le constructeur.

Par ailleurs, le point d'approche finale FAF et le point d'approche initiale IAF sont agencés à une altitude minimale de sécurité MSA.

Cette altitude minimale de sécurité MSA est soit égale à une altitude minimale de sécurité seuil HMSS, soit égale à la somme d'une hauteur HPFM mémorisée d'un sommet de la plateforme à atteindre et d'une constante minimale de sécurité CMIN prédéterminée par le constructeur. La valeur la plus haute des deux valeurs obtenues ainsi est alors utilisée soit :

$$MSA = \max(HMSS\ ;\ CMIN + HPFM)$$

L'altitude minimale de sécurité seuil HMSS peut valoir 1000 ft. De même, la constante minimale de sécurité CMIN peut valoir 500 ft.

Le point d'approche finale FAF est alors positionné à une distance d'approche finale DFAF du point de décision MAP égale à

$$DFAF = k1 + \frac{MSA - MINI}{\tan \beta}$$

où « DFAF » représente la distance d'approche finale, « k1 » représente une constante d'approche fixée par le constructeur, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP.

Le point d'approche initiale IAF est alors à une distance d'approche initiale DIAF du point de décision MAP égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP .

Cette trajectoire peut aussi comprendre un point de virage TP connu sous l'expression anglaise « turning point » situé en amont du point d'approche initiale IAF.

Lorsque la trajectoire est élaborée, le procédé peut autoriser la modification de ladite trajectoire tant qu'un point de fixation prédéterminé situé en amont du point d'approche initiale IAF n'est pas atteint.

Par exemple, la trajectoire peut être définitivement gelée une minute avant d'atteindre le point de virage TP.

Ainsi, durant une étape de modification STP31, l'équipage peut modifier la trajectoire.

En outre, une étape de vérification STP32 peut aussi être entreprise.

Par exemple, cette étape de vérification peut être réalisée une fois, par exemple tant que l'aéronef est situé à plus de trois minutes du point d'approche initiale IAF ou que l'aéronef est situé à plus de deux minutes du point de virage TP.

Lors de cette étape de vérification, le module de vérification 17 détermine si la distance latérale dite « distance latérale courante » ayant servie à l'élaboration de la trajectoire est compatible avec l'intégrité de position fournie par le système de localisation GNSS 20.

Ce module de vérification 17 calcule alors la distance théorique minimale COMPUTED LOV selon la première relation précédente en sollicitant le système de localisation GNSS 20.

Le module de vérification réalise ce calcul, même si le calcul a été effectué lors de l'étape de préparation STP2. En effet, l'intégrité de position fournie par le système de localisation GNSS 20 peut s'être dégradée depuis la réalisation de l'étape de préparation STP2.

Dès lors, le module de vérification 17 compare la distance latérale courante à la distance théorique minimale

Lorsque ladite distance latérale courante est inférieure à ladite distance théorique minimale, deux alternatives sont envisageables.

Ainsi, si la plus grande distance mémorisée dans la liste explicitée précédemment est inférieure à la distance théorique minimale calculée, le système 7 indique à l'équipage d'abandonner l'approche par le biais d'une alerte sonore ou visuelle.

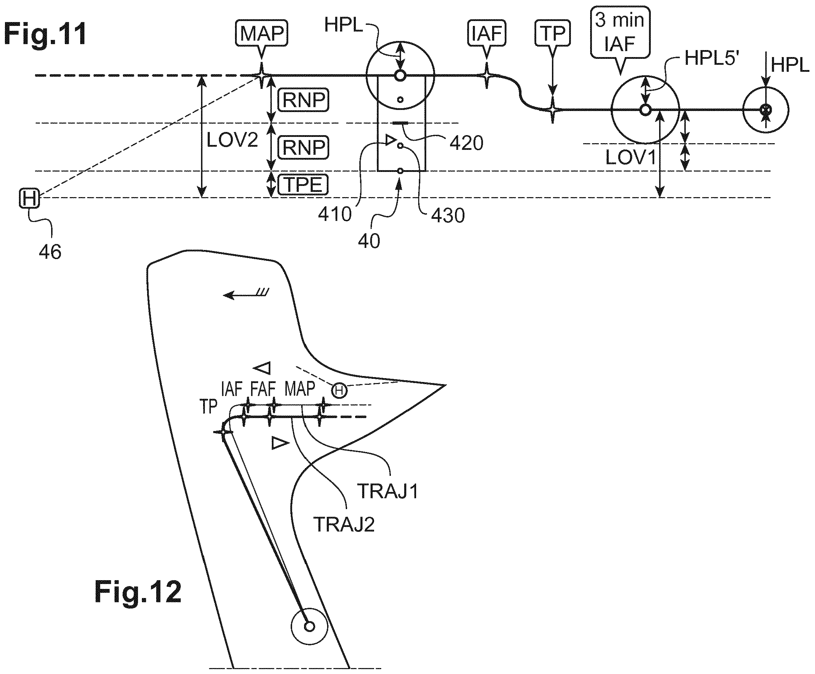

Dans la négative et en référence à la figure 11, le module de vérification augmente la distance latérale courante LOV1 pour obtenir une distance latérale amendée LOV2. Cette distance latérale amendée LOV2 est égale à la valeur de la plus petite distance mémorisée dans ladite liste qui est supérieure à ladite distance théorique minimale.

L'étape de construction STP3 est alors remise en oeuvre en remplaçant ladite distance latérale courante par ladite distance latérale amendée.

En référence à la figure 12, le système élabore une nouvelle trajectoire TRAJ2, en remplacement de la trajectoire TRAJ1 initiale.

Le système 7 peut aussi générer une alerte lorsqu'une distance latérale amendée est calculée.

Lorsque la trajectoire est gelée, le module de navigation peut requérir le guidage de l'aéronef vers le point d'approche initiale IAF. Le point d'approche initiale IAF peut par exemple être rejoint par le biais d'un virage passant par un point de virage TP connu sous l'expression anglaise « turning point ».

Dès lors, la trajectoire d'approche élaborée est suivie durant une phase de vol d'approche STP4 :

- soit par le biais d'un contrôle manuel de l'aéronef opéré totalement par l'équipage éventuellement à l'aide de données d'aide au pilotage affichées sur au moins un instrument de vol 40,

- soit par le biais d'un contrôle manuel de l'aéronef opéré par l'équipage et par le biais d'un contrôle automatique opéré par le système de pilotage automatique, l'équipage gérant le pilotage vertical de l'aéronef et le système de pilotage automatique gérant le pilotage horizontal de l'aéronef par exemple,

- soit par le biais d'un contrôle automatique opéré par le système de pilotage automatique.

L'équipage peut alors choisir de mettre fin au suivi de la trajectoire d'approche, ou encore peut requérir une modification de la trajectoire d'approche si nécessaire.

En référence à la figure 10, l'aéronef est dirigé vers le point de décision MAP. Lorsque le point de décision est atteint, si l'équipage visualise la plateforme et si l'atterrissage est possible, l'équipage se dirige vers la plateforme selon la flèche F1. A l'inverse, l'équipage met en place une procédure usuelle visant à diriger l'aéronef vers une trajectoire annexe selon la flèche F2.

Lors de la phase de vol d'approche débutant au point d'approche initiale IAF, le procédé met en oeuvre une phase de contrôle d'intégrité.

En référence à la figure 11, préalablement à la phase de vol d'approche et lorsque la trajectoire est gelée, un module de contrôle d'intégrité 16 détermine la valeur de la performance d'intégrité de position RNP requise pour le système de localisation durant l'approche, selon la deuxième relation suivante :

$$RNP = \min\big[(LOV - TPE)/2; k3\big]$$

où « RNP » représente la performance d'intégrité de position requise, « LOV » représente la distance latérale ayant donnée naissance à la trajectoire suivie, « TPE » représente l'erreur de positionnement de la plateforme cible, « k3 » représente une performance d'intégrité seuil de l'ordre de 0.3 Nm par exemple, « / » représente le signe de la division.

Durant une étape de surveillance mise en oeuvre lors de la phase de vol d'approche, le module de contrôle d'intégrité compare la performance d'intégrité de position RNP et le rayon d'intégrité de position HPL courant transmis par le système de localisation GNSS 20.

Le module de contrôle d'intégrité génère une alerte si le rayon d'intégrité de position HPL courant est supérieur à la performance d'intégrité de position RNP pour que l'équipage abandonne l'approche.

En outre, la figure 11 illustre un indicateur de situation horizontale 40.

Cet indicateur de situation horizontale 40 est muni d'une échelle comprenant une pluralité de plots 430. Dès lors, l'indicateur de situation horizontale 40 positionne sur l'échelle un premier symbole 420 matérialisant la trajectoire d'approche et un deuxième symbole 410 matérialisant l'écart de position latéral de l'aéronef par rapport à la trajectoire à suivre.

**Revendications**

1. Procédé pour faciliter l'approche d'une plateforme (46) avec un aéronef (1), comprenant :

   - une étape préparatoire (STP1) pour construire une base de données (5) de plateformes incluant pour chaque plateforme (46) au moins un attribut définissant ladite plateforme,
   - une étape de paramétrage (STP2) durant laquelle on paramètre une distance dite « distance latérale (LOV) », la distance latérale représentant une distance de décalage séparant au moins partiellement latéralement la trajectoire à suivre d'une trajectoire dirigée vers la plateforme suivant la course d'approche,

- une phase de vol d'approche (STP4) le long d'une trajectoire d'approche comprenant un point d'approche initiale (IAF), un point d'approche finale (FAF), et un point de décision (MAP) présents dans un même plan vertical (100) dirigé parallèlement à une course (CRS), ladite plateforme cible à atteindre étant décalée par rapport à ce plan vertical (100) d'une distance orthogonale (D0) au moins égale à une distance latérale (LOV),

**caractérisé en ce que** :

- durant ladite étape préparatoire (STP1), pour chaque plateforme on mémorise un attribut relatif à une erreur de positionnement (TPE) de la plateforme,
- préalablement à ladite phase de vol d'approche débutant au point d'approche initiale (IAF), on détermine avec un module de contrôle d'intégrité (16) la valeur d'une performance d'intégrité de position (RNP) requise pour un système de localisation de l'aéronef, cette performance d'intégrité de position (RNP) étant égale à la valeur minimale entre d'une part une performance seuil prédéterminée et, d'autre part, le quotient de la différence de ladite distance latérale moins ladite erreur de positionnement d'une plateforme cible à atteindre divisée par deux soit :

$$RNP = \min\left[(LOV - TPE)/2; k3\right]$$

où « RNP » représente la performance d'intégrité de position requise, « LOV » représente ladite distance latérale, « TPE » représente ladite erreur de positionnement, « k3 » représente ladite performance seuil prédéterminée, « / » représente le signe de la division,
- durant une étape de surveillance mise en oeuvre lors de ladite phase de vol d'approche (STP4), ledit aéronef étant muni d'un système de localisation GNSS (20) déterminant le rayon d'un cercle dans lequel ledit aéronef se situe dit « rayon d'intégrité de position (HPL) »,

  ◦ on compare avec ledit module de contrôle d'intégrité ladite performance d'intégrité de position (RNP) et ledit rayon d'intégrité de position (HPL),
  ◦ on génère une alerte si ledit rayon d'intégrité de position (HPL) est supérieur à ladite performance d'intégrité de position (RNP).

2. Procédé selon la revendication 1,
   **caractérisé en ce que** ladite performance seuil prédéterminée a une valeur de 0.3 Nm.

3. Procédé selon l'une quelconque des revendications 1 à 2,
   **caractérisé en ce que**

   - durant ladite étape de paramétrage (STP2), on détermine ladite distance latérale (LOV) en :

     o calculant automatiquement la valeur d'une distance théorique minimale (COMPUTED LOV) égale à la somme de ladite erreur de positionnement (TPE) de la plateforme cible, d'une marge prédéterminée (HPL BUFFER) et du double d'une valeur maximale entre d'une part ledit rayon d'intégrité de position (HPL) et, d'autre part, un rayon prédit fourni par le système de localisation GNSS (20) indiquant le rayon d'intégrité de position qui sera atteint à l'issue d'un temps prédéterminé soit :

$$COMPUTED\,LOV = 2 * \max\left[HPL; HPL5'\right] + HPL\,BUFFER + TPE$$

où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,
     ◦ en comparant ladite distance théorique minimale à des distances mémorisées dans une liste, ladite distance latérale étant égale à la plus petite distance mémorisée supérieure à ladite distance théorique minimale.

4. Procédé selon l'une quelconque des revendications 1 à 2,
   **caractérisé en ce que** durant ladite étape de paramétrage (STP2), ladite distance latérale (LOV) est fixée à une valeur prédéterminée mémorisée.

**5.** Procédé selon l'une quelconque des revendications 1 à 2,
**caractérisé en ce que** durant ladite étape de paramétrage (STP2), ladite distance latérale (LOV) est choisie par un pilote à partir d'une liste comprenant une pluralité de distances latérales mémorisées.

**6.** Procédé selon l'une quelconque des revendications 1 à 5,
**caractérisé en ce que** ladite trajectoire étant élaborée durant une étape de construction (STP3), on autorise la modification de ladite trajectoire jusqu'à un point de fixation prédéterminé situé en amont dudit point d'approche initiale (IAF).

**7.** Procédé selon l'une quelconque des revendications 1 à 6,
**caractérisé en ce que** durant une étape de vérification (STP32) réalisée préalablement à ladite phase de vol d'approche et suite à une étape de construction (STP3) de la trajectoire :

- on détermine si une distance latérale dite « distance latérale courante » ayant servie à l'élaboration de la trajectoire est compatible avec le rayon d'intégrité de position calculée par ledit système de localisation GNSS (20) de l'aéronef en :

◦ calculant automatiquement la valeur d'une distance théorique minimale (COMPUTED LOV) égale à la somme de ladite erreur de positionnement (TPE) de la plateforme cible, d'une marge prédéterminée (HPL BUFFER) et du double d'une valeur maximale entre d'une part ledit rayon d'intégrité de position (HPL) et, d'autre part, un rayon prédit fourni par le système de localisation GNSS (20) indiquant le rayon d'intégrité de position qui sera atteint à l'issue d'un temps prédéterminé soit :

$$COMPUTED\ LOV = 2 * \max[HPL; HPL5'] + HPL\ BUFFER + TPE$$

où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,
o en comparant ladite distance latérale courante à ladite distance théorique minimale

- lorsque ladite distance latérale courante est inférieure à ladite distance théorique minimale, une liste comprenant une pluralité de distances mémorisées :

o on abandonne ladite approche si la plus grande distance desdites distances mémorisées est inférieure à ladite distance théorique minimale (COMPUTED LOV), ou
◦ on augmente ladite distance latérale courante pour obtenir une distance latérale amendée, cette distance latérale amendée étant égale à la plus petite distance mémorisée dans ladite liste qui est supérieure à ladite distance théorique minimale, puis on remet en oeuvre ladite étape de construction en remplaçant ladite distance latérale courante par ladite distance latérale amendée.

**8.** Procédé selon la revendication 7,
**caractérisé en ce qu'**on autorise la mise en oeuvre de ladite étape de vérification tant que l'aéronef est situé à plus de trois minutes dudit point d'approche initiale (IAF).

**9.** Procédé selon l'une quelconque des revendications 7 à 8,
**caractérisé en ce qu'**on autorise la mise en oeuvre de ladite étape de vérification tant que l'aéronef est situé à plus de deux minutes d'un point de virage à partir duquel l'aéronef doit effectuer un virage pour rallier ledit point d'approche initiale (IAF).

**10.** Procédé selon la revendication 7,
**caractérisé en ce qu'**on génère une alerte lorsqu'une distance latérale amendée est calculée.

**11.** Procédé selon l'une quelconque des revendications 1 à 10
**caractérisé en ce que** :

- durant ladite étape préparatoire (STP1), pour au moins une plateforme, on mémorise des attributs définissant au moins une zone cible matérialisant une destination, ladite au moins une zone cible incluant un centre géométrique (50) de la plateforme, lesdits attributs comprenant pour ce centre géométrique (50) des coordonnées géographiques de ce centre géométrique (50), au moins une hauteur de ce centre géométrique et le rayon dit « rayon d'obstacle » (OR) d'un cercle centrée sur le centre géométrique (50) dans lequel est inscrite la plateforme,
- durant ladite étape de paramétrage (STP2), les informations suivantes sont paramétrées avec un module de paramétrage (10) :

 o une zone cible dite « zone cible choisie » sélectionnée parmi les zones cibles mémorisées,
 o une course (CRS) à suivre pour rejoindre ladite plateforme cible munie de la zone cible choisie,
 o un paramètre de hauteur relatif à une altitude minimale de décision (MDA) d'un point de décision (MAP) pour une descente en approche finale vers ladite plateforme cible,

 - durant une étape de construction (STP3) mise en oeuvre par un module de navigation (15), si ladite zone cible choisie est un centre géométrique (50), on construit ladite trajectoire d'approche en déterminant la position du point d'approche initiale (IAF), du point d'approche finale (FAF), et du point de décision (MAP) en réponse auxdites informations et auxdits attributs de la zone cible choisie, le point d'approche initiale (IAF) ainsi que le point d'approche finale (FAF) et le point de décision (MAP) étant présents dans ledit plan vertical (100) dirigé parallèlement à ladite course (CRS), ledit centre géométrique étant décalé par rapport à ce plan vertical (100) de ladite distance orthogonale (D0) égale à la somme de ladite distance latérale (LOV) et dudit rayon d'obstacle (OR).

**12.** Procédé selon la revendication 11,
**caractérisé en ce que** :

 - durant ladite étape préparatoire (STP1), pour au moins une plateforme, on mémorise des attributs définissant au moins une zone cible de type zone d'atterrissage (51) distincte dudit centre géométrique, lesdits attributs mémorisés incluant des coordonnées géographiques de cette zone d'atterrissage et au moins une hauteur de cette zone d'atterrissage.
 - durant l'étape de construction (STP3), si ladite zone cible choisie est une zone d'atterrissage, on détermine la position d'un point d'approche initiale (IAF), d'un point d'approche finale (FAF), d'un point de décision (MAP) en réponse auxdites informations et auxdits attributs de la plateforme cible, le point d'approche initiale (IAF) ainsi que le point d'approche finale (FAF) ainsi que le point de décision (MAP) étant présents dans ledit plan vertical (100) dirigé parallèlement à ladite course (CRS) et, ladite zone d'atterrissage étant décalée par rapport à ce plan vertical (100) d'une distance orthogonale (D0) égale à ladite distance latérale (LOV).

**13.** Procédé selon l'une quelconque des revendications 11 à 12,
**caractérisé en ce que** durant ladite étape de paramétrage (STP2) :

 - soit un pilote paramètre manuellement ladite altitude minimale de décision (MDA),
 - soit on détermine automatiquement avec le module de navigation ladite altitude minimale de décision (MDA), cette altitude minimale de décision (MDA) étant la valeur maximale entre d'une part une altitude seuil et, d'autre part la somme de ladite hauteur de la zone cible choisie et d'une constante minimale de décision prédéterminée par le constructeur.

**14.** Procédé selon la revendication 13,
**caractérisé en ce que** ledit module de navigation (15) détermine l'heure d'arrivée sur la plateforme cible, ladite altitude seuil variant selon ladite heure d'arrivée.

**15.** Procédé selon l'une quelconque des revendications 11 à 14,
**caractérisé en ce que** ledit point de décision (MAP) est positionné en déterminant une distance longitudinale (D1) le séparant d'un plan tangent passant par les coordonnées géographiques de la zone cible choisie et orthogonal au plan vertical selon la relation suivante :

$$D1 = D0 / \tan(\alpha)$$

où « / » représente le signe de la division, « D0 » représente ladite distance orthogonale, « α » représente un angle de décalage fixé par le constructeur.

16. Procédé selon l'une quelconque des revendications 11 à 15,
**caractérisé en ce que** durant l'étape de paramétrage (STP2), on choisit un côté de décalage audit plan vertical (100) par rapport à la plateforme cible.

17. Procédé selon l'une quelconque des revendications 11 à 16,
**caractérisé en ce que** ledit point d'approche finale (FAF) est positionné à une altitude minimale de sécurité (MSA), ladite altitude minimale de sécurité (MSA) étant égale à la valeur maximale entre d'une part une altitude minimale de sécurité seuil et, d'autre part la somme d'une hauteur d'un sommet de la plateforme cible et d'une constante minimale de sécurité prédéterminée par le constructeur.

18. Procédé selon l'une quelconque des revendications 11 à 17,
**caractérisé en ce que** ledit point d'approche finale (FAF) est positionné à une distance d'approche finale (DFAF) du point de décision (MAP) égale à

$$DFAF = k1 + \frac{MSA - MINI}{\tan \beta}$$

où « DFAF » représente la distance d'approche finale, « k1 » représente une constante d'approche fixée par le constructeur, « MSA » représente une altitude minimale de sécurité à laquelle est positionné le point d'approche finale, « MINI » représente ladite altitude minimale de décision (MDA), « β » représente l'angle d'un segment de vol en descente reliant le point d'approche finale à un plan horizontal contenant ledit point de décision (MAP).

19. Procédé selon la revendication 17,
**caractérisé en ce que** ledit point d'approche initiale (IAF) est positionné à ladite altitude minimale de sécurité (MSA).

20. Procédé selon l'une quelconque des revendications 11 à 19,
**caractérisé en ce que** ledit point d'approche initiale (IAF) est positionné à une distance d'approche initiale (DIAF) du point de décision (MAP) égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur, « MSA » représente une altitude minimale de sécurité à laquelle est positionné le point d'approche finale, « MINI » représente ladite altitude minimale de décision (MDA), « β » représente l'angle d'un segment de vol en descente reliant le point d'approche finale à un plan horizontal contenant ledit point de décision (MAP) .

21. Procédé selon l'une quelconque des revendications 11 à 20,
**caractérisé en ce que** ladite trajectoire d'approche comprend un point de palier (LPO) interposé entre le point d'approche finale (FAF) et le point de décision (MAP), le point de palier étant placé à la même altitude minimale de décision (MDA) que le point de décision (MAP) et à une distance de palier (DLPO) du point de décision (MAP) égale à

$$DLPO = k1$$

où « DLPO » représente la distance de palier, « k1 » représente une constante d'approche fixée par le constructeur.

22. Procédé selon l'une quelconque des revendications 1 à 21,
**caractérisé en ce qu'**un module de guidage vertical (25) et un module de guidage horizontal (30) communiquent avec un système de pilotage (35) pour guider l'aéronef le long de la trajectoire d'approche élaborée par le module de navigation (15).

**23.** Procédé selon l'une quelconque des revendications 1 à 22,
**caractérisé en ce que** ce procédé inclut une étape de guidage sur ledit point d'approche initiale (IAF) calculé.

**24.** Procédé selon l'une quelconque des revendications 1 à 23,
**caractérisé en ce que**, ledit aéronef ayant un indicateur de situation horizontale muni d'une échelle comprenant une pluralité de plots, ledit indicateur de situation horizontale positionnant sur ladite échelle un premier symbole (420) centré au milieu de l'échelle matérialisant la trajectoire d'approche et un deuxième symbole (410) matérialisant l'écart de position latéral de l'aéronef par rapport à ladite trajectoire d'approche à suivre, l'écartement entre ledit premier symbole et le deuxième plot adjacent représentant la valeur de la performance d'intégrité de position (RNP).

**25.** Système (7) d'aide à la navigation
**caractérisé en ce que**, ledit système (7) d'aide à la navigation est destiné à appliquer le procédé selon l'une quelconque des revendications 1 à 24, ledit système (7) d'aide à la navigation comprenant :

- une base de données incluant pour chaque plateforme (46) au moins un attribut définissant ladite plateforme, un attribut étant relatif à une erreur de positionnement (TPE) de la plateforme,
- un module de paramétrage destiné à mettre en oeuvre l'étape de paramétrage,
- un système de localisation GNSS (20) destiné à déterminer le rayon d'un cercle dans lequel ledit aéronef se situe dit « rayon d'intégrité de position (HPL) »,
- un module de contrôle d'intégrité (16) qui est destiné à déterminer la valeur d'une performance d'intégrité de position (RNP), à comparer ladite performance d'intégrité de position (RNP) et ledit rayon d'intégrité de position (HPL), à générer une alerte si ledit rayon d'intégrité de position (HPL) est supérieur à ladite performance d'intégrité de position (RNP).

**Patentansprüche**

**1.** Verfahren zum Erleichtern des Annäherns an eine Plattform (46) mit einem Luftfahrzeug (1), umfassend:

- einen vorbereitenden Schritt (STP1) zum Erstellen einer Datenbank (5) von Plattformen, die für jede Plattform (46) mindestens ein Attribut aufweist, das die Plattform definiert,
- einen Schritt des Parametrierens (STP2), bei dem ein Abstand, der "seitlicher Abstand (LOV)" genannt wird, parametriert wird, wobei der seitliche Abstand einen Versatzabstand darstellt, der mindestens teilweise seitlich die zu folgende Flugbahn von einer Flugbahn trennt, die gemäß dem Annäherungsweg auf die Plattform gerichtet ist,
- eine Annäherungsflugphase (STP4) entlang einer Annäherungsflugbahn, die einen anfänglichen Annäherungspunkt (IAF), einen endgültigen Annäherungspunkt (FAF) und einen Entscheidungspunkt (MAP) aufweist, die in einer gleichen vertikalen Ebene (100) vorhanden sind, die parallel zu einer Bahn (CRS) gerichtet ist, wobei die zu erreichende Zielplattform gegenüber dieser vertikalen Ebene (100) um einen orthogonalen Abstand (D0), der mindestens gleich einem seitlichen Abstand (LOV) ist, versetzt ist,

**dadurch gekennzeichnet, dass**:

- bei dem vorbereitenden Schritt (STP1) für jede Plattform ein Attribut in Bezug auf einen Positionierungsfehler (TPE) der Plattform gespeichert wird,
- vor der Annäherungsflugphase, die an dem anfänglichen Annäherungspunkt (IAF) beginnt, mit einem Integritätskontrollmodul (16) der Wert einer Positionsintegritätsperformance (RNP) bestimmt wird, der für ein Ortungssystem des Luftfahrzeugs erforderlich ist, wobei diese Positionsintegritätsperformance (RNP) gleich dem Mindestwert zwischen einerseits einer vorbestimmten Schwellenperformance und andererseits dem Quotienten aus der Differenz des seitlichen Abstands minus dem Positionierungsfehler einer zu erreichenden Zielplattform dividiert durch zwei ist, das heißt:

$$RNP = \min[(LOV\text{-}TPE)/2; k3]$$

wobei "RNP" die erforderliche Positionsintegritätsperformance darstellt, "LOV" den seitlichen Abstand darstellt, "TPE" den Positionierungsfehler darstellt, "k3" die vorbestimmte Schwellenperformance darstellt, "/" das Divisionszeichen darstellt,

- bei einem Überwachungsschritt, der bei der Annäherungsflugphase (STP4) umgesetzt wird, nachdem das Luftfahrzeug mit einem Ortungssystem GNSS (20) versehen ist, das den Radius eines Kreises bestimmt, in dem sich das Luftfahrzeug befindet, der "Positionsintegritätsradius (HPL)" genannt wird,

• mit dem Integritätskontrollmodul (16) die Positionsintegritätsperformance (RNP) und der Positionsintegritätsradius (HPL) verglichen werden,
• ein Alarm erzeugt wird, wenn der Positionsintegritätsradius (HPL) größer als die Positionsintegritätsperformance (RNP) ist.

2. Verfahren nach Anspruch 1, **dadurch gekennzeichnet, dass** die vorbestimmte Schwellenperformance einen Wert von 0,3 Nm aufweist.

3. Verfahren nach einem der Ansprüche 1 bis 2, **dadurch gekennzeichnet, dass**

- bei dem Schritt des Parametrierens (STP2) der seitliche Abstand (LOV) bestimmt wird, indem:

• automatisch der Wert eines theoretischen Mindestabstands (COMPUTED LOV) berechnet wird, der gleich der Summe des Positionierungsfehlers (TPE) der Zielplattform, einer vorbestimmten Marge (HPL BUFFER) und des Doppelten eines maximalen Wertes zwischen einerseits dem Positionsintegritätsradius (HPL) und andererseits einem vorhergesagten Radius ist, der von dem Ortungssystem GNSS (20) bereitgestellt wird, das den Positionsintegritätsradius angibt, der nach Ablauf einer vorbestimmten Zeit erreicht werden wird, das heißt:

$$ COMPUTEDLOV = 2 * \max[HPL; HPL5] + HPLBUFFER + TPE $$

wobei "COMPUTED LOV" den theoretischen Mindestabstand darstellt, "TPE" den Positionierungsfehler darstellt, "HPL BUFFER" die Marge darstellt, "HPL" den Positionsintegritätsradius darstellt, "HPL5'''" den vorbestimmten Radius darstellt, "*" das Multiplikationszeichen darstellt,
• der theoretische Mindestabstand mit Abständen, die in der Liste gespeichert werden, verglichen wird, wobei der seitliche Abstand gleich dem kleinsten gespeicherten Abstand ist, der größer als der theoretische Mindestabstand ist.

4. Verfahren nach einem der Ansprüche 1 bis 2, **dadurch gekennzeichnet, dass** bei dem Schritt des Parametrierens (STP2) der seitliche Abstand (LOV) auf einen gespeicherten vorbestimmten Wert festgelegt wird.

5. Verfahren nach einem der Ansprüche 1 bis 2, **dadurch gekennzeichnet, dass** bei dem Schritt des Parametrierens (STP2) der seitliche Abstand (LOV) von einem Piloten ausgehend von einer Liste ausgewählt wird, die mehrere gespeicherte Seitenabstände aufweist.

6. Verfahren nach einem der Ansprüche 1 bis 5, **dadurch gekennzeichnet, dass**, nachdem die Flugbahn bei einem Schritt des Erstellens (SATP3) ausgearbeitet wird, das Ändern der Flugbahn bis zu einem vorbestimmten Fixierungspunkt genehmigt wird, der sich vorgelagert vor dem anfänglichen Annäherungspunkt (IAF) befindet.

7. Verfahren nach einem der Ansprüche 1 bis 6, **dadurch gekennzeichnet, dass** bei einem Schritt des Überprüfens (STP32), der vor der Annäherungsflugphase und nach einem Schritt des Erstellens (SATP3) der Flugbahn durchgeführt wird:

- bestimmt wird, ob ein seitlicher Abstand, der "aktueller seitlicher Abstand" genannt wird, der zum Erstellen der Flugbahn gedient hat, mit dem Positionsintegritätsradius kompatibel ist, der von dem Ortungssystem GNSS (20) des Luftfahrzeugs berechnet wird, indem:

• automatisch der Wert eines theoretischen Mindestabstands (COMPUTED LOV) berechnet wird, der gleich der Summe des Positionierungsfehlers (TPE) der Zielplattform, einer vorbestimmten Marge (HPL BUFFER) und des Doppelten eines maximalen Wertes zwischen einerseits dem Positionsintegritätsradius (HPL) und andererseits einem vorhergesagten Radius ist, der von dem Ortungssystem GNSS (20) bereitgestellt wird, das den Positionsintegritätsradius angibt, der nach Ablauf einer vorbestimmten Zeit erreicht werden wird, das heißt:

$$COMPUTED\,LOV = 2 * \max(HPL; HPL5') + HPL\,BUFFER + TPE$$

wobei "COMPUTED LOV" den theoretischen Mindestabstand darstellt, "TPE" den Positionierungsfehler darstellt, "HPL BUFFER" die Marge darstellt, "HPL" den Positionsintegritätsradius darstellt, "HPL5'" den vorbestimmten Radius darstellt, "*" das Multiplikationszeichen darstellt,

• indem der aktuelle seitliche Abstand mit dem theoretischen Mindestabstand verglichen wird,

- wenn der aktuelle seitliche Abstand kleiner als der theoretische Mindestabstand verglichen wird, wobei eine Liste mehrere gespeicherte Abstände aufweist:

• die Annäherung aufgegeben wird, wenn der größte der gespeicherten Abstände kleiner als der theoretische Mindestabstand (COMPUTED LOV) ist oder
• der aktuelle seitliche Abstand erhöht wird, um einen geänderten seitlichen Abstand zu erhalten, wobei dieser geänderte seitliche Abstand gleich dem kleinsten Abstand ist, der in der Liste gespeichert wird, der größer als der theoretische Mindestabstand ist, und dann der Schritt des Erstellens umgesetzt wird, indem der aktuelle seitliche Abstand durch den geänderten seitlichen Abstand ausgetauscht wird.

8. Verfahren nach Anspruch 7, **dadurch gekennzeichnet, dass** das Umsetzen des Schritts des Überprüfens ermöglicht wird, solange sich das Luftfahrzeug mehr als drei Minuten von dem anfänglichen Annäherungspunkt (IAF) befindet.

9. Verfahren nach einem der Ansprüche 7 bis 8, **dadurch gekennzeichnet, dass** das Umsetzen des Schritts des Überprüfens ermöglicht wird, solange sich das Luftfahrzeug mehr als zwei Minuten von einem Wendepunkt befindet, von dem aus das Luftfahrzeug eine Kurve durchführen muss, um sich an den anfänglichen Annäherungspunkt (IAF) anzuschließen.

10. Verfahren nach Anspruch 7, **dadurch gekennzeichnet, dass** ein Alarm erzeugt wird, wenn ein geänderter seitlicher Abstand berechnet wird.

11. Verfahren nach einem der Ansprüche 1 bis 10, **dadurch gekennzeichnet, dass**:

- bei dem vorbereitenden Schritt (STP1) für mindestens eine Plattform Attribute gespeichert werden, die mindestens einen Zielbereich definierten, der einen Zielort darstellt, wobei mindestens ein Zielbereich eine geometrische Mitte (50) der Plattform umfasst, wobei die Attribute für diese geometrische Mitte (50) geographische Koordinaten dieser geometrischen Mitte (50), mindestens eine Höhe dieser geometrischen Mitte und den Radius, der "Hindernisradius" (OR) genannt wird, eines Kreises aufweisen, der in der geometrischen Mitte (50) zentriert ist, in dem die Plattform eingeschrieben ist,
- bei dem Schritt des Parametrierens (STP2) die folgenden Informationen mit einem Parametrierungsmodul (10) parametriert werden:

• ein Zielbereich, der "ausgewählter Zielbereich" genannt wird, der aus den gespeicherten Zielbereichen ausgewählt wird,
• eine Bahn (CRS), die zu verfolgen ist, um die Zielplattform zu erreichen, die mit dem ausgewählten Zielbereich ausgestattet ist,
• ein Höhenparameter in Bezug auf eine Mindestentscheidungshöhe (MDA) eines Entscheidungspunktes (MAP) für einen Sinkflug im Endanflug zu der Zielplattform,

- bei einem Schritt des Erstellens (SATP3), der von einem Navigationsmodul (15) umgesetzt wird, wenn der ausgewählte Zielbereich eine geometrische Mitte (50) ist, die Annäherungsflugbahn erstellt wird, indem die Position des anfänglichen Annäherungspunktes (IAF), des endgültigen Annäherungspunktes (FAF) und des Entscheidungspunktes (MAP) als Antwort auf die Informationen und auf die Attribute des ausgewählten Zielbereichs bestimmt wird, wobei der anfängliche Annäherungspunkt (IAF) und der endgültige Annäherungspunkt (FAF) und der Entscheidungspunkt (MAP) in der vertikalen Ebene (100) vorhanden sind, die parallel zu der Bahn (CRS) gerichtet ist, wobei die geometrische Mitte in Bezug auf diese vertikale Ebene (100) um den orthogonalen Abstand (D0) versetzt ist, der gleich der Summe des seitlichen Abstands (LOV) und des Hindernisradius (OR) ist.

12. Verfahren nach Anspruch 11, **dadurch gekennzeichnet, dass**:

- bei dem vorbereitenden Schritt (STP1) für mindestens eine Plattform Attribute gespeichert werden, die mindestens einen Zielbereich des Typs des Landebereichs (51) definieren, der von der geometrischen Mitte (50) verschieden ist, wobei die gespeicherten Attribute geographische Koordinaten dieses Landebereichs und mindestens eine Höhe dieses Landebereichs aufweisen.
- bei einem Schritt des Erstellens (SATP3), wenn der ausgewählte Zielbereich ein Landebereich ist, die Position eines anfänglichen Annäherungspunktes (IAF), eines endgültigen Annäherungspunktes (FAF), eines Entscheidungspunktes (MAP) als Antwort auf die Informationen und auf die Attribute der Zielplattform bestimmt wird, wobei der anfängliche Annäherungspunkt (IAF) und der endgültige Annäherungspunkt (FAF) und der Entscheidungspunkt (MAP) in der vertikalen Ebene (100) vorhanden sind, die parallel zu der Bahn (CRS) gerichtet ist, und wobei der Landebereich in Bezug auf diese vertikale Ebene (100) um einen orthogonalen Abstand (D0) versetzt ist, der gleich dem seitlichen Abstand (LOV) ist.

13. Verfahren nach einem der Ansprüche 11 bis 12, **dadurch gekennzeichnet, dass** bei dem Schritt des Parametrierens (STP2):

- ein Pilot entweder die Mindestentscheidungshöhe (MDA) manuell parametriert
- oder die Mindestentscheidungshöhe (MDA) automatisch mit dem Navigationsmodul parametriert wird, wobei diese Mindestentscheidungshöhe (MDA) der maximale Wert zwischen einerseits einer Schwellenhöhe und andererseits der Summe der Höhe des ausgewählten Zielbereichs und einer Mindestentscheidungskonstante ist, die von dem Hersteller vorbestimmt wird.

14. Verfahren nach Anspruch 13, **dadurch gekennzeichnet, dass** das Navigationsmodul (15) die Ankunftszeit auf der Zielplattform bestimmt, wobei die Schwellenhöhe je nach der Ankunftszeit variiert.

15. Verfahren nach einem der Ansprüche 11 bis 14, **dadurch gekennzeichnet, dass** der Entscheidungspunkt (MAP) positioniert wird, indem er einen Längsabstand (D1) bestimmt, der ihn von einer Tangentialebene trennt, die durch die geographischen Koordinaten des ausgewählten Zielbereichs verläuft und orthogonal zu der vertikalen Ebene nach der folgenden Beziehung ist:

$$D1 = D0 / \tan(a)$$

wobei "/" das Divisionszeichen darstellt, "D0" den orthogonalen Abstand darstellt, "a" einen Versetzungswinkel darstellt, der von dem Hersteller festgelegt wird.

16. Verfahren nach einem der Ansprüche 11 bis 15, **dadurch gekennzeichnet, dass** bei dem Schritt des Parametrierens (STP2) eine Versatzseite zu der vertikalen Ebene (100) in Bezug auf die Zielplattform ausgewählt wird.

17. Verfahren nach einem der Ansprüche 11 bis 16, **dadurch gekennzeichnet, dass** der endgültige Annäherungspunkt (FAF) auf einer Mindestsicherheitshöhe (MSA) positioniert wird, wobei die Mindestsicherheitshöhe (MSA) gleich dem Maximalwert zwischen einerseits einem Schwellenwert der Mindestsicherheitshöhe und andererseits der Summe einer Höhe eines Scheitelpunktes der Zielplattform und einer Mindestsicherheitskonstante ist, die von dem Hersteller vorbestimmt wird.

18. Verfahren nach einem der Ansprüche 11 bis 17, **dadurch gekennzeichnet, dass** der endgültige Annäherungspunkt (FAF) auf einem endgültigen Annäherungsabstand (DFAF) des Entscheidungspunktes (MAP) positioniert wird, der gleich

$$DFAF = k1 + \frac{MSA - MINI}{\tan \beta}$$

ist, wobei "DFAF" den endgültigen Annäherungsabstand darstellt, "k1" eine Annäherungskonstante darstellt, die vom Hersteller festgelegt wird, "MSA" eine Mindestsicherheitshöhe darstellt, auf der der endgültige Annäherungspunkt positioniert wird, "MINI" die Mindestentscheidungshöhe (MDA) darstellt, "$\beta$" den Winkel eines Segments im Sinkflug darstellt, das den endgültigen Annäherungspunkt mit einer horizontalen Ebene verbindet, die den Entscheidungspunkt (MAP) enthält.

19. Verfahren nach Anspruch 17, **dadurch gekennzeichnet, dass** der anfängliche Annäherungspunkt (IAF) auf der Mindestsicherheitshöhe (MSA) positioniert wird.

20. Verfahren nach einem der Ansprüche 11 bis 19, **dadurch gekennzeichnet, dass** der anfängliche Annäherungspunkt (IAF) auf einem anfänglichen Annäherungsabstand (DIAF) des Entscheidungspunktes (MAP) positioniert wird, der gleich

$$DIAF = k1 + \frac{MSA - MINI}{\tan \beta} + k2$$

ist, wobei "DIAF" den anfänglichen Annäherungsabstand darstellt, "k1" eine Annäherungskonstante darstellt, die vom Hersteller festgelegt wird, "k2" eine Variabel darstellt, die vom Hersteller festgesetzt wird, "MSA" eine Mindestsicherheitshöhe darstellt, auf der der endgültige Annäherungspunkt positioniert wird, "MINI" die Mindestentscheidungshöhe (MDA) darstellt, "$\beta$" den Winkel eines Segments im Sinkflug darstellt, das den endgültigen Annäherungspunkt mit einer horizontalen Ebene verbindet, die den Entscheidungspunkt (MAP) enthält.

21. Verfahren nach einem der Ansprüche 11 bis 20, **dadurch gekennzeichnet, dass** die Annäherungsflugbahn einen Lagerpunkt (LPO) aufweist, der zwischen dem endgültigen Annäherungspunkt (FAF) und dem Entscheidungspunkt (MAP) positioniert wird, wobei der Lagerpunkt auf der gleichen Mindestentscheidungshöhe (MDA) wie der Entscheidungspunkt (MAP) und in einem Lagerabstand (DLPO) von dem Entscheidungspunkt (MAP) angeordnet wird, der gleich

$$DLPO = k1 \text{ ist,}$$

wobei "DLPO" den Lagerabstand darstellt, "k1" eine Annäherungskonstante darstellt, die von dem Hersteller festgelegt wird.

22. Verfahren nach einem der Ansprüche 1 bis 21, **dadurch gekennzeichnet, dass** ein Vertikalführungsmodul (25) und ein Horizontalführungsmodul (30) mit einem Steuerungssystem (35) kommunizieren, um das Luftfahrzeug entlang der Annäherungsflugbahn zu führen, die von dem Navigationsmodul (15) erarbeitet wird.

23. Verfahren nach einem der Ansprüche 1 bis 22, **dadurch gekennzeichnet, dass** dieses Verfahren einen Schritt des Führens auf dem berechneten anfänglichen Annäherungspunkt (IAF) aufweist.

24. Verfahren nach einem der Ansprüche 1 bis 23, **dadurch gekennzeichnet, dass** das Luftfahrzeug einen Horizontal Situation Indicator aufweist, der mit einer Skala versehen ist, die mehrere Markierungen aufweist, wobei der Horizontal Situation Indicator auf der Skala ein erstes Symbol (420), das in der Mitte der Skala zentriert ist, die die Annäherungsflugbahn darstellt, und ein zweites Symbol (410) positioniert, das die seitliche Positionsabweichung des Flugzeugs in Bezug auf die zu folgende Annäherungsflugbahn darstellt, wobei der Abstand zwischen dem ersten Symbol und der zweiten angrenzenden Markierung den Wert der Positionsintegritätsperformance (RNP) ausmacht.

25. Navigationshilfesystem (7), **dadurch gekennzeichnet, dass** das Navigationshilfesystem (7) dazu bestimmt ist, das Verfahrens nach einem der Ansprüche 1 bis 24 anzuwenden, wobei das Navigationshilfesystem (7) aufweist:

- eine Datenbank, die für jede Plattform (46) mindestens ein Attribut aufweist, das die Plattform definiert, wobei sich ein Attribut auf einen Positionierungsfehler (TPE) der Plattform bezieht,
- ein Parametrierungsmodul, das dazu bestimmt ist, den Schritt des Parametrierens umzusetzen,
- ein Ortungssystem GNSS (20), das dazu bestimmt ist, den Radius eines Kreises zu bestimmen, in dem sich das Luftfahrzeug befindet, der "Positionsintegritätsradius (HPL)" genannt wird,
- ein Integritätskontrollmodul (16), das dazu bestimmt ist, den Wert einer Positionsintegritätsperformance (RNP) zu bestimmen, die Positionsintegritätsperformance (RNP) und den Positionsintegritätsradius (HPL) zu vergleichen, einen Alarm zu erzeugen, wenn der Positionsintegritätsradius (HPL) größer als die Positionsintegritätsperformance (RNP) ist.

**Claims**

1. Method for facilitating the approach to a platform (46) by an aircraft (1), comprising:

   - a preparatory step (STP1) for constructing a database (5) of platforms which includes, for each platform (46), at least one attribute which defines said platform,
   - a parameter-setting step (STP2) during which parameters are set for a distance referred to as the "lateral distance (LOV)", the lateral distance representing an offset distance separating, at least partially in the lateral direction, the path to be followed from a path which points towards the platform and follows the approach course,
   - a stage (STP4) for approach flight along an approach path comprising an initial approach fix (IAF), a final approach fix (FAF) and a decision point (MAP) that are located in the same vertical plane (100) which is directed in parallel with a course (CRS), said target platform to be reached being offset with respect to said vertical plane (100) by an orthogonal distance (D0) which is at least equal to a lateral distance (LOV),

   **characterised in that**:

   - during said preparatory step (STP1), an attribute relating to a positioning error (TPE) of the platform is stored for each platform,
   - before said stage for approach flight commencing at the initial approach fix (IAF), the value of a position integrity performance (RNP) required for a location system of the aircraft is determined by means of an integrity-checking module (16), said position integrity performance (RNP) being equal to the minimum value between a predetermined performance threshold and the quotient of the difference of said lateral difference minus said positioning error of a target platform to be reached divided by two, i.e.:

   $$RNP = \min[(LOV - TPE)/2; k3]$$

   where "RNP" represents the required position integrity performance, "LOV" represents said lateral distance, "TPE" represents said positioning error, "k3" represents said predetermined performance threshold, and "/" represents the division sign,
   - during a monitoring step carried out during said approach flight step (STP4), said aircraft being provided with a GNSS location system (20) which determines the radius of a circle in which said aircraft is located, which radius is referred to as the "position integrity radius (HPL)",

      ◦ said position integrity performance (RNP) is compared with said position integrity radius (HPL) by means of said integrity-checking module,
      ◦ an alert is generated if said position integrity radius (HPL) is greater than said position integrity performance (RNP).

2. Method according to claim 1, **characterised in that** said predetermined performance threshold has a value of 0.3 Nm.

3. Method according to either claim 1 or claim 2, **characterised in that**

   - during said parameter-setting step (STP2), said lateral distance (LOV) is determined by:

∘ automatically calculating the value of a minimum theoretical distance (COMPUTED LOV) which is equal to the sum of said positioning error (TPE) of the target platform, of a predetermined margin (HPL BUFFER) and of twice a maximum value between said position integrity radius (HPL) and a predicted radius provided by the GNSS location system (20) which indicates the position integrity radius that will reached at the end of a predetermined time period, i.e.:

$$COMPUTEDLOV = 2 * \max[HPL; HPL5'] + HPLBUFFER + TPE$$

where "COMPUTED LOV" represents said minimum theoretical distance, "TPE" represents said positioning error, "HPL BUFFER" represents said margin, "HPL" represents said position integrity radius, "HPL5'" represents said predicted radius, and "*" represents the multiplication sign, and
∘ comparing said minimum theoretical distance with distances stored in a list, said lateral distance being equal to the smallest stored distance that is greater than said minimum theoretical distance.

4.  Method according to either claim 1 or claim 2, **characterised in that**, during said parameter-setting step (STP2), said lateral distance (LOV) is set at a predetermined stored value.

5.  Method according to either claim 1 or claim 2, **characterised in that**, during said parameter-setting step (STP2), said lateral distance (LOV) is selected by a pilot from a list comprising a plurality of stored lateral distances.

6.  Method according to any of claims 1 to 5, **characterised in that**, said path being established during a construction step (STP3), modification of said path is authorised up until a predetermined fixing point located upstream of said initial approach fix (IAF).

7.  Method according to any of claims 1 to 6, **characterised in that**, during a verification step (STP32), carried out before said approach flight stage and after a path construction step (STP3):

- it is determined whether a lateral distance, referred to as the "current lateral distance", used to establish the path is compatible with the position integrity radius calculated by said GNSS location system (20) of the aircraft by:

∘ automatically calculating the value of a minimum theoretical distance (COMPUTED LOV) which is equal to the sum of said positioning error (TPE) of the target platform, of a predetermined margin (HPL BUFFER) and of twice a maximum value between said position integrity radius (HPL) and a predicted radius provided by the GNSS location system (20) which indicates the position integrity radius that will be reached at the end of a predetermined time period, i.e.:

$$COMPUTEDLOV = 2 * \max[HPL; HPL5'] + HPLBUFFER + TPE$$

where "COMPUTED LOV" represents said minimum theoretical distance, "TPE" represents said positioning error, "HPL BUFFER" represents said margin, "HPL" represents said position integrity radius, "HPL5'" represents said predicted radius, and "*" represents the multiplication sign, and
∘ comparing said current lateral distance with said minimum theoretical distance, and

- when said current lateral distance is less than said minimum theoretical distance, a list comprising a plurality of stored distances:

∘ said approach is abandoned if the greatest distance of said stored distances is less than said minimum theoretical distance (COMPUTED LOV), or
∘ said current lateral distance is increased so as to obtain an amended lateral distance, said amended lateral distance being equal to the smallest distance stored in said list that is greater than said minimum theoretical distance, and then said construction step is carried out again by replacing said current lateral distance with said amended lateral distance.

8.  Method according to claim 7, **characterised in that** it is authorised for said verification step to be carried out as long as the aircraft is located more than three minutes from said initial approach fix (IAF).

9. Method according to either claim 7 or claim 8, **characterised in that** it is authorised for said verification step to be carried out as long as the aircraft is located more than two minutes from a turning point at which the aircraft has to turn so as to reach said initial approach fix (IAF).

10. Method according to claim 7, **characterised in that** an alert is generated when an amended lateral distance is calculated.

11. Method according to any of claims 1 to 10, **characterised in that**:

   - during said preparatory step (STP1), for at least one platform, attributes which define at least one target zone indicating a destination are stored, said at least one target zone including a geometric centre (50) of the platform, said attributes comprising for said geometric centre (50) geographical coordinates of said geometric centre (50), at least one height of said geometric centre, and the radius, referred to as the "obstacle radius" (OR), of a circle centred on the geometric centre (50) in which the platform lies,
   - during said parameter-setting step (STP2), parameters for the following information are set by means of a parameter-setting module (10):

      ◦ a target zone, referred to as the "selected target zone", selected from among the stored target zones,
      ◦ a course (CRS) to be followed in order to reach said target platform provided with the selected target zone,
      ◦ a height parameter relating to a minimum decision altitude (MDA) of a decision point (MAP) for a final approach descent towards said target platform,

   - during a construction step (STP3), carried out by a navigation module (15), if said selected target zone is a geometric centre (50), said approach path is constructed by determining the position of the initial approach fix (IAF), of the final approach fix (FAF) and of the decision point (MAP) in response to said information and attributes of the selected target zone, the initial approach fix (IAF), the final approach fix (FAF) and the decision point (MAP) being located in said vertical plane (100) which is directed in parallel with said course (CRS), said geometric centre being offset with respect to said vertical plane (100) by said orthogonal distance (D0) which is equal to the sum of said lateral distance (LOV) and of said obstacle radius (OR).

12. Method according to claim 11, **characterised in that**:

   - during said preparatory step (STP1), for at least one platform, attributes which define at least one target landing zone (51) separate from said geometric centre are stored, said stored attributes including geographical coordinates of said landing zone and at least one height of said landing zone,
   - during the construction step (STP3), if said selected target zone is a landing zone, the position of an initial approach fix (IAF), of a final approach fix (FAF) and of a decision point (MAP) is determined in response to said information and attributes of the target platform, the initial approach fix (IAF), the final approach fix (FAF) and the decision point (MAP) being located in said vertical plane (100) which is directed in parallel with said course (CRS), said landing zone being offset with respect to said vertical plane (100) by an orthogonal distance (D0) which is equal to said lateral distance (LOV).

13. Method according to either claim 11 or claim 12, **characterised in that**, during said parameter-setting step (STP2):

   - a pilot manually sets parameters for said minimum decision altitude (MDA), or
   - said minimum decision altitude (MDA) is determined automatically by means of the navigation module, said minimum decision altitude (MDA) being the maximum value between a threshold altitude and the sum of said height of the selected target zone and of a minimum decision constant predetermined by the manufacturer.

14. Method according to claim 13, **characterised in that** said navigation module (15) determines the arrival time at the target platform, said threshold altitude varying according to said arrival time.

15. Method according to any of claims 11 to 14, **characterised in that** said decision point (MAP) is positioned by determining a longitudinal distance (D1) which separates said point from a tangent plane which passes through the geographical coordinates of the selected target zone and is orthogonal to the vertical plane according to the following relationship:

$$D1 = D0/\tan(\alpha)$$

where "/" represents the division sign, "D0" represents said orthogonal distance, and "α" represents an offset angle set by the manufacturer.

16. Method according to any of claims 11 to 15, **characterised in that**, during the parameter-setting step (STP2), an offset side on said vertical plane (100) with respect to the target platform is selected.

17. Method according to any of claims 11 to 16, **characterised in that** said final approach fix (FAF) is positioned at a minimum safe altitude (MSA), said minimum safe altitude (MSA) being equal to the maximum value between a threshold minimum safe altitude and the sum of a height of the top of the target platform and of a minimum safe constant predetermined by the manufacturer.

18. Method according to any of claims 11 to 17, **characterised in that** said final approach fix (FAF) is positioned at a final approach distance (DFAF) from the decision point (MAP) equal to:

$$DFAF = k1 + \frac{MSA - MINI}{\tan \beta}$$

where "DFAF" represents the final approach distance, "k1" represents an approach constant set by the manufacturer, "MSA" represents a minimum safe altitude at which the final approach fix is positioned, "MINI" represents said minimum decision altitude (MDA), and "β" represents the angle of a flight descent segment connecting the final approach fix to a horizontal plane containing said decision point (MAP).

19. Method according to claim 17, **characterised in that** said initial approach fix (IAF) is positioned at said minimum safe altitude (MSA).

20. Method according to any of claims 11 to 19, **characterised in that** said initial approach fix (IAF) is positioned at an initial approach distance (DIAF) from the decision point (MAP) equal to

$$DIAF = k1 + \frac{MSA - MINI}{\tan \beta} + k2$$

where "DIAF" represents the initial approach distance, "k1" represents an approach constant set by the manufacturer, "k2" represents a variable determined by the manufacturer, "MSA" represents a minimum safe altitude at which the final approach fix is positioned, "MINI" represents said minimum decision altitude (MDA), and "β" represents the angle of a fight descent segment connecting the final approach fix to a horizontal plane containing said decision point (MAP).

21. Method according to any of claims 11 to 20, **characterised in that** said approach path comprises a levelling-off point (LPO) positioned between the final approach fix (FAF) and the decision point (MAP), the levelling-off point being placed at the same minimum decision altitude (MDA) as the decision point (MAP) and at a levelling-off distance (DLPO) from the decision point (MAP) equal to:

$$DLPO = k1$$

where "DLPO" represents the levelling-off distance, and "k1" represents an approach constant set by the manufacturer.

22. Method according to any of claims 1 to 21, **characterised in that** a vertical guidance module (25) and a horizontal guidance module (30) communicate with a piloting system (35) for guiding the aircraft along the approach path established by the navigation module (15).

23. Method according to any of claims 1 to 22, **characterised in that** said method includes a step of guiding to said calculated initial approach fix (IAF).

24. Method according to any of claims 1 to 23, **characterised in that**, said aircraft having a horizontal situation indicator provided with a scale comprising a plurality of markers, said horizonal situation indicator positioning on said scale a first symbol (420) which is centred in the middle of the scale and indicates the approach path and a second symbol (410) which indicates the difference in lateral position of the aircraft with respect to said approach path to be followed, the distance between said first symbol and the adjacent second marker representing the value of the position integrity performance (RNP).

25. Navigation aid system (7), **characterised in that** said navigation aid system (7) is intended for applying the method according to any of claims 1 to 24, said navigation aid system (7) comprising:

- a database including, for each platform (46), at least one attribute which defines said platform, an attribute relating to a positioning error (TPE) of the platform,
- a parameter-setting module for carrying out the parameter-setting step,
- a GNSS location system (20) for determining the radius of a circle in which said aircraft is located, which radius is referred to as the "position integrity radius (HPL)",
- an integrity-checking module (16) for determining the value of a position integrity performance (RNP), for comparing said position integrity performance (RNP) with said position integrity radius (HPL), and for generating an alert if said position integrity radius (HPL) is greater than said position integrity performance (RNP).

**Fig.1**

FMS

FMS

**Fig.2**

10;15;16;17

**Fig.3**

| STP1 | STP2 | STP3 | STP31 | STP32 | STP4 |

FMS

P1
P2
P3

**Fig.4**

FMS

APP1
APP2
APP3

**Fig.5**

FMS

MDA
CRS
SIDE
LOW
TARGET

**Fig.6**

**Fig.7**

46

OR

51;52

51;53

50

103

MAP

402

400

V2

V1

**Fig.8**

CRS1

46

401

CRS2

**Fig.9**

**Fig.10**

Fig.11

Fig.12

## RÉFÉRENCES CITÉES DANS LA DESCRIPTION

**Documents brevets cités dans la description**

- US 20100168939 A
- FR 2937010
- EP 2175338 A
- EP 0682332 A
- US 20120130566 A
- US 20110307126 A
- FR 2944128

**Littérature non-brevet citée dans la description**

- **K.M DODSON ; J.R.A. STEVENS.** A North Sea trial to investigate the use of Differential GPS for instrument Approaches to Offshore Platforms. *23rd European Rotorcraft Forum,* Septembre 1997